# EUROPEAN PATENT APPLICATION

(11) **EP 4 576 880 A1**
(43) Date of publication of application: **25.06.2025**
(21) Application number: 23854528.9
(22) Date of filing: 18.08.2023
(51) Int. Cl.: H04W 48/18

(54) **COMMUNICATION METHOD, TERMINAL, AND NETWORK-SIDE DEVICE**

(30) Priority: 19.08.2022 CN 202211003981
(71) Applicant: Vivo Mobile Communication Co., Ltd., Dongguan, Guangdong 523863 (CN)
(72) Inventor: YU, Hang, Dongguan, Guangdong 523863 (CN); KANG, Yanchao, Dongguan, Guangdong 523863 (CN); SUN, Xiaowen, Dongguan, Guangdong 523863 (CN)
(74) Representative: Winter, Brandl - Partnerschaft mbB
(86) International application number: PCT/CN2023/113799
(87) International publication number: WO 2024/037632

(57) **Abstract**

This application discloses a communication method, a terminal, and a network-side device, and pertains to the communication field. The communication method in embodiments of this application includes: sending, by a terminal, a first message to a network-side device, where the first message is used for requesting to use a requested slice to establish a connection to the network-side device; and receiving, by the terminal, a second message sent by the network-side device, where the second message carries information for indicating whether using the requested slice in a target tracking area TA is supported.

## Description

### CROSS-REFERENCE TO RELATED APPLICATIONS

This application claims priority to Chinese Patent Application No. 202211003981.6, filed on August 19, 2022 and entitled "COMMUNICATION METHOD, TERMINAL, AND NETWORK-SIDE DEVICE", which is incorporated herein by reference in its entirety.

### TECHNICAL FIELD

This application pertains to the field of communication technologies, and specifically, relates to a communication method, a terminal, and a network-side device.

### BACKGROUND

In the current standard, if a slice requested by a terminal is rejected, the slice may actually only be rejected in a specific tracking area (Registration Area, TA) within a registration area (Registration Area, RA), but the network side informs the terminal that the slice is not allowed to be used throughout the entire RA, causing the terminal to be unable to use the slice throughout the entire RA. The slice is allowed to be used again only when the related timer expires, the terminal has moved out of the RA, or the terminal is turned off, , resulting in low efficiency of slice usage.

### SUMMARY

Embodiments of this application provide a communication method, a terminal, and a network-side device, which can solve the problem of communication between the terminal and the network-side device.

According to a first aspect, a communication method is provided, applied to a terminal, where the method includes:
sending, by a terminal, a first message to a network-side device, where the first message is used for requesting to use a requested slice to establish a connection to the network-side device; and
receiving, by the terminal, a second message sent by the network-side device, where the second message carries information for indicating whether using the requested slice in a target tracking area TA is supported.

According to a second aspect, a communication method is provided, applied to a network-side device, where the method includes:
receiving, by a network-side device, a first message sent by a terminal, where the first message is used for requesting to use a requested slice to establish a connection to the network-side device; and
sending, by the network-side device, a second message to the terminal, where the second message carries information for indicating whether using the requested slice in a target tracking area TA is supported.

According to a third aspect, a communication apparatus is provided, including:
a sending module, configured to send a first message to a network-side device, where the first message is used for requesting to use a requested slice to establish a connection to the network-side device; and
a receiving module, configured to receive a second message sent by the network-side device, where the second message carries information for indicating whether using the requested slice in a target tracking area TA \is supported.

According to a fourth aspect, a communication apparatus is provided, including:
a receiving module, configured to receive a first message sent by a terminal, where the first message is used for requesting to use a requested slice to establish a connection to the network-side device; and
a sending module, configured to send a second message to the terminal, where the second message carries information for indicating whether using the requested slice in a target tracking area TA is supported.

According to a fifth aspect, a terminal is provided. The terminal includes a processor and a memory, where the memory stores a program or instruction executable on the processor. When the program or instruction is executed by the processor, the method according to the first aspect is implemented.

According to a sixth aspect, a terminal is provided, including a processor and a communication interface, where the communication interface is configured to send a first message to a network-side device, the first message being used for requesting to use a requested slice to establish a connection to the network-side device; and receive a second message sent by the network-side device, the second message carrying information indicating whether using the requested slice use in a target tracking area TA is supported.

According to a seventh aspect, a network-side device is provided. The network-side device includes a processor and a memory, where the memory stores a program or instruction executable on the processor. When the program or instruction is executed by the processor, the method according to the second aspect is implemented.

According to an eighth aspect, a network-side device is provided, including a processor and a communication interface, where the communication interface is configured to receive a first message sent by a terminal, the first message being used for requesting to use a requested slice to establish a connection to the network-side device; and send a second message to the terminal, the second message carrying information indicating whether using the requested slice in a target tracking area TA is supported.

According to a ninth aspect, a communication system is provided, including: a terminal and a network-side device. The terminal may be configured to execute the communication method according to the first aspect, and the network-side device may be configured to execute the communication method according to the second aspect.

According to a tenth aspect, a readable storage medium is provided, where a program or instruction is stored in the readable storage medium, and when the program or instruction is executed by a processor, the method according to the first aspect is implemented, or the method according to the second aspect is implemented.

According to an eleventh aspect, a chip is provided. The chip includes a processor and a communication interface, the communication interface is coupled to the processor, and the processor is configured to run a program or instruction to implement the method according to the first aspect or the method according to the second aspect.

According to a twelfth aspect, a computer program/program product is provided. The computer program/program product is stored in a storage medium, and the computer program/program product is executed by at least one processor so as to implement the communication method according to the first aspect.

In the embodiments of this application, the network-side device sends the second message, for indicating whether using the requested slice in the target tracking area TA is supported, to the terminal. This enables the terminal to select and use slices based on the TA granularity after receiving the second message, effectively improving slice utilization efficiency and allowing the terminal to use slices more efficiently.

### BRIEF DESCRIPTION OF DRAWINGS

FIG. 1a is a structural diagram of a wireless communications system to which embodiments of this application are applicable;
FIG. 1b is a schematic diagram of a communication method according to an embodiment of this application;
FIG. 2 is a first schematic flowchart of a communication method according to an embodiment of this application;
FIG. 3 is a first schematic diagram of a rejected network slice selection assistance information information element of a communication method according to an embodiment of this application;
FIG. 4 is a first schematic diagram of a rejected network slice selection assistance information domain of a communication method according to an embodiment of this application;
FIG. 5 is a first schematic diagram of an extended rejected network slice selection assistance information information element of a communication method according to an embodiment of this application;
FIG. 6a is a first schematic diagram of a partially extended rejected network slice selection assistance information list domain of a communication method according to an embodiment of this application;
FIG. 6b is a second schematic diagram of a partially extended rejected network slice selection assistance information list domain of a communication method according to an embodiment of this application;
FIG. 7 is a second schematic diagram of a rejected network slice selection assistance information domain of a communication method according to an embodiment of this application;
FIG. 8 is a second schematic diagram of a rejected network slice selection assistance information information element of a communication method according to an embodiment of this application;
FIG. 9 is a third schematic diagram of a rejected network slice selection assistance information domain of a communication method according to an embodiment of this application;
FIG. 10 is a second schematic diagram of an extended rejected network slice selection assistance information information element of a communication method according to an embodiment of this application;
FIG. 11a is a third schematic diagram of a partially extended rejected network slice selection assistance information list domain of a communication method according to an embodiment of this application;
FIG. 11b is a fourth schematic diagram of a partially extended rejected network slice selection assistance information list domain of a communication method according to an embodiment of this application;
FIG. 12 is a fourth schematic diagram of a rejected network slice selection assistance information domain of a communication method according to an embodiment of this application;
FIG. 13 is a schematic diagram of a network slice selection assistance information service area list information element of a communication method according to an embodiment of this application;
FIG. 14 is a schematic diagram of a network slice selection assistance information service area list domain of a communication method according to an embodiment of this application;
FIG. 15a is a first schematic diagram of a network slice selection assistance information service area list field of a communication method according to an embodiment of this application;
FIG. 15b is a second schematic diagram of a network slice selection assistance information service area list field of a communication method according to an embodiment of this application;
FIG. 15c is a third schematic diagram of a network slice selection assistance information service area list field of a communication method according to an embodiment of this application;
FIG. 15d is a fourth schematic diagram of a network slice selection assistance information service area list field of a communication method according to an embodiment of this application;
FIG. 16 is a schematic diagram of an extended allowed network slice selection assistance information information element of a communication method according to an embodiment of this application;
FIG. 17 is a schematic diagram of an allowed network slice selection assistance information domain of a communication method according to an embodiment of this application;
FIG. 18 is a schematic diagram of terminal capability indication information of a communication method according to an embodiment of this application;
FIG. 19 is a second schematic flowchart of a communication method according to an embodiment of this application.
FIG. 20 is a schematic flowchart of interaction of a communication method according to an embodiment of this application;
FIG. 21 is a first schematic structural diagram of a communication apparatus according to an embodiment of this application;
FIG. 22 is a second schematic structural diagram of a communication apparatus according to an embodiment of this application;
FIG. 23 is a schematic structural diagram of a communication device according to an embodiment of this application;
FIG. 24 is a schematic hardware structural diagram of a terminal according to an embodiment of this application; and
FIG. 25 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

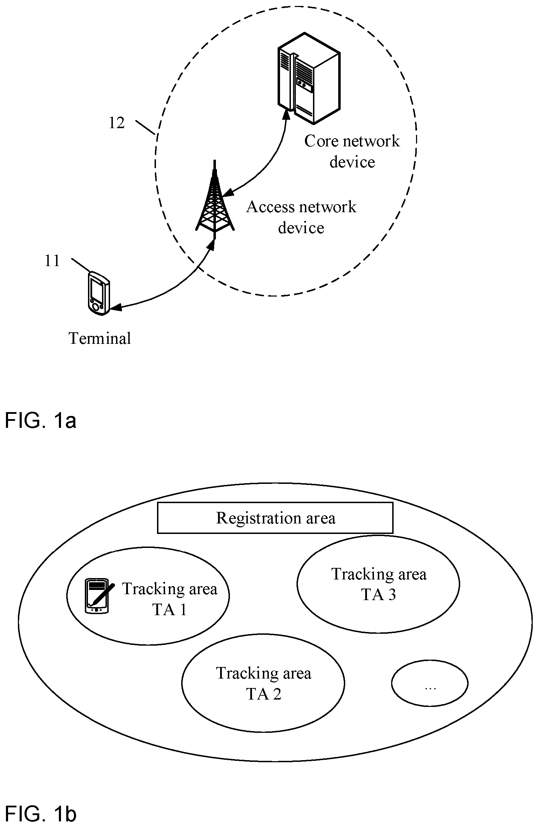

FIG. 1a is a block diagram of a wireless communications system to which embodiments of this application are applicable. The wireless communications system includes a terminal 11 and a network-side device 12. The terminal 11 may be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (VUE), pedestrian user equipment (PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device may include base stations, WLAN access points, WiFi nodes, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that only a core network device in an NR system is used as an example in the embodiments of this application and the core network device is not limited to a specific type.

For a clearer understanding of the various embodiments of this application, first, some relevant background knowledge is introduced as follows.

### RA and TA

During the network deployment, the AMF may have established multiple TAs in one RA area. When a terminal initiates registration, the AMF assigns a tracking area identity list (Tracking Area Identity List, TAI list) (for example, up to 16) to the UE, and this TAI list is the registration area (RA) of the terminal. Within this RA, the terminal does not need to perform registration updates, and when the terminal has moved out of this RA area, the UE needs to actively initiate a mobility registration update. It can be seen that one of the purposes of establishing the concepts of RA and TA in the network is to avoid the need for the UE to frequently initiate mobility registration updates. Only when the UE has moved out of the RA does it need to actively initiate mobility registration updates, thereby reducing network signaling load.

### Slice allowance and rejection

During the registration process, the terminal first sends a registration request message to the network-side device, and the terminal reports the requested slice information to the network. The requested slice information includes one or more pieces of single network slice selection assistance information (Single Network Slice Selection Assistance Information, S-NSSAI). The network-side device determines whether to allow service to be provided to the requested slice based on the subscription status of the terminal and the current network conditions. If service is allowed to be provided to the requested slice, the slice S-NSSAI is placed in an allowed NSSAI and replied to the terminal; and if service is not allowed to be provided to the requested slice, the slice S-NSSAI is placed in a rejected rejected NSSAI and replied to the terminal. Optionally, if the terminal indicates support for extended rejected network slice selection assistance information (extended rejected NSSAI) in the terminal capability indication information (5GMM capability IE) in the registration request message, the network-side device will also place the information of the slice to which service is not allowed to be provided in the extended rejected NSSAI and reply to the terminal.

When replying with rejected NSSAI, the network-side device may carry a cause (cause) value "slice unusable in the current registration area," meaning that the slice is unusable throughout the entire RA. For example, as shown in FIG. 1b, the terminal initiates the registration of S-NSSAI in TA 1 and is rejected in TA1. The cause value used by the network-side is "slice unusable in the current registration area," so the terminal is not allowed to use the slice currently. However, when the terminal has moved to TA 2 or TA 3, these two TAs support the slice. The prior art does not support the use of slices by the terminal in this area. The utilization efficiency of the slices is thus greatly reduced. In this way, the slice is unusable in all TAs in the entire RA, and it is only allowed to be used in the following situations:

The terminal is turned off, the terminal has moved out of the current registration area, the universal integrated circuit card (Universal Integrated Circuit Card, UICC) containing the universal subscriber identity module (Universal Subscriber Identity Module, USIM) has been removed, a "user data list" entry with the stand-alone non-public network SNPN identifier of the current stand-alone non-public network (Stand-alone Non-Public Network, SNPN) has been removed, or the rejected S-NSSAI has been removed.

The following describes in detail a communication method provided in an embodiment of this application through some embodiments and their application scenarios, with reference to the accompanying drawings.

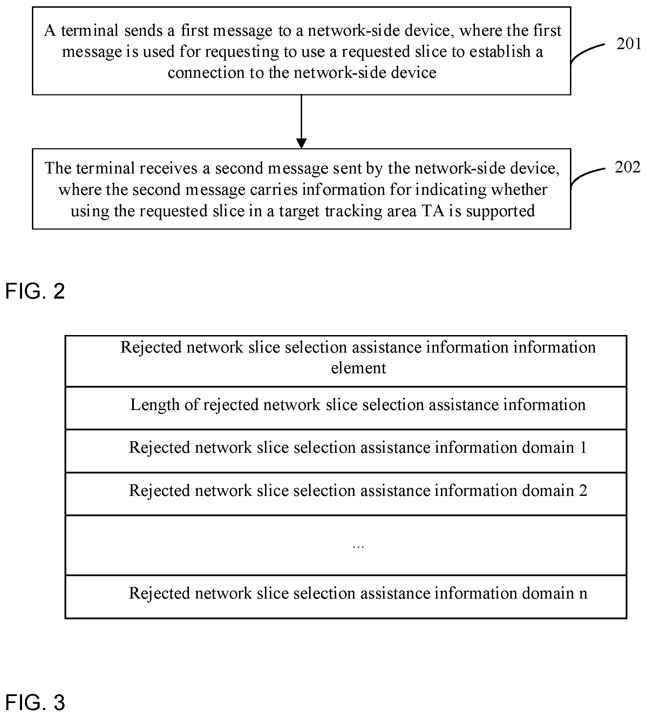

FIG. 2 is a first schematic flowchart of a communication method according to an embodiment of this application. As shown in FIG. 2, the method provided in this embodiment includes Step S201 and Step S202.

Step 201: A terminal sends a first message to a network-side device, where the first message is used for requesting to use a requested slice to establish a connection to the network-side device.

Specifically, to achieve communication between the terminal and the network-side device, the terminal sends the first message to the network-side device. The first message is used for requesting the use of the requested slice to establish a connection to the network-side device. Optionally, the first message includes information about the requested slice, and the requested slice contains one or more S-NSSAIs, such that the network-side device can determine whether the requested slice is allowed to be used to establish a connection and communication with the terminal based on the information about the requested slice in the first message, the subscription information of the terminal, and the current network conditions.

Step 202: The terminal receives a second message sent by the network-side device, where the second message carries information for indicating whether using the requested slice in a target tracking area TA is supported.

Specifically, in the current standard, if the slice requested by the terminal is rejected, the network side informs the terminal that the slice is not allowed to be used throughout the entire RA, resulting in low slice utilization efficiency. To solve the problem of low slice utilization efficiency, in this embodiment of this application, after the network-side device receives information about the requested slice sent by the terminal, the network-side device sends the second message to the terminal. The second message carries information for indicating whether using the requested slice is supported in the target tracking area TA. In other words, the network-side device sends the second message informing the terminal whether the requested slice is allowed to be used in the tracking area TA. Thus, after receiving the second message, the terminal can select and use slices based on a TA granularity, enabling the terminal to use slices more efficiently and improving slice utilization efficiency, thus solving the problem of a slice being unusable in all TAs within the same RA.

In the method in the above embodiment, the network-side device sends the second message to the terminal, carrying information for indicating whether using the requested slice in the target tracking area TA is supported. This enables the terminal to select and use slices based on the TA granularity after receiving the second message, effectively improving slice utilization efficiency and allowing the terminal to use slices more efficiently.

In one embodiment, the second message includes at least one of the following:
information about at least one first slice and first indication information, where the first indication information is used to indicate that the at least one first slice is unusable in a current TA; where the first slice is a slice in the requested slice, and the target tracking area TA includes the current TA; or
the second message includes at least one of the following:
   information about at least one first slice, information about a first TA corresponding to each first slice in the at least one first slice, information about at least one second slice, information about a second TA corresponding to each second slice in the at least one second slice, and second indication information, where the first TA is a TA that does not support use of the first slice, the second TA is a TA that supports use of the second slice, and the second indication information is used to indicate that the first slice is unusable in the first TA, where the first slice or the second slice is a slice in the requested slice, and the target tracking area TA includes the first TA or the second TA; or
   the second message includes at least one of the following:
      information about at least one third slice, information about a third TA, and third indication information, where the third indication information is used to indicate that the third TA is a TA that supports use of the third slice or a TA that does not support use of the third slice, the target TA includes the third TA, and the third slice is a slice in the requested slice.

Specifically, in this embodiment of this application, the network-side device sends the second message, indicating whether using the requested slice is supported in the target tracking area TA, to the terminal, such that after receiving the second message, the terminal can select and use slices based on the TA granularity, improving slice utilization efficiency. Optionally, in this embodiment, the first TA, second TA, third TA, and target TA may be TAs included in the current registration area, or may be TAs included in another registration area. Optionally, one first slice corresponds to one or more first TAs, and one second slice corresponds to one or more second TAs. Optionally, one first TA corresponds to one or more first slices, and one second TA corresponds to one or more second slices.

Optionally, the second message includes at least one of the following: information about at least one first slice and first indication information. The first indication information is used to indicate that the first slice is unusable in the current TA, where the current TA is the TA in which the terminal is located when it sends the first message to the network-side device. In other words, the network-side device, through the first indication information in the second message, indicates that the first slice is unusable in the current TA. Thus, after receiving the first indication information and the information about the first slice in the second message, the terminal can determine that it is not allowed to use the first slice in the current TA. The terminal can then select another slice within the current TA to establish a connection and communication with the network-side device. When the terminal has moved out of the current TA, the first slice is allowed to be used again. In other words, after receiving the request from the terminal, the network-side device informs the terminal of the information that the slice is not applicable in the current TA, based on applicability status of the slice in multiple TAs under the RA through newly added indication information (cause value). Thus, after receiving the indication information, the terminal can determine, based on information about a current TA in which the terminal is located, whether the slice is allowed to be used in the current TA.

Optionally, the second message includes at least one of the following: information about at least one first slice, information about the first TA corresponding to each first slice in the at least one first slice, information about at least one second slice, information about the second TA corresponding to each second slice in the at least one second slice, and second indication information. In other words, the network-side device informs the terminal the first slice is allowed to be used in which TAs and the second slice is not allowed to be used in which TAs through the information about the first TA corresponding to the first slice, the information about the second TA corresponding to the second slice, and the second indication information in the second message, so that the terminal can select and use the slices based on the information about the first TA corresponding to the first slice, the information about the second TA corresponding to the second slice, and the second indication information in the second message, and based on the information about the TA where the terminal is currently located.

Optionally, the second message includes at least one of the following: information about at least one third slice, information about the third TA, and third indication information; where the third indication information is used to indicate that the third TA is a TA that supports the use of the third slice or a TA that does not support the use of the third slice. In other words, the network-side device indicates which TAs are TAs that support the use of the third slice and which TAs are TAs that do not support the use of the third slice through the third indication message in the second message. Thus, after receiving the third indication message in the second message, the terminal can determine whether the third slice is allowed to be used in the target TA to establish a connection and communication with the network-side device based on the third indication message in the second message. Optionally, the target TA may be a TA in the current RA or another RA. In other words, after receiving the request from the terminal, the network-side device informs, according to the applicability of the slices in multiple TAs under the RA, the terminal information about the list of TAs that support the use of slices and/or reject the use of slices based on a slice granularity. After receiving the information about the list of TAs that support the use of slices and/or reject the use of slices based on the slice granularity, the terminal can determine, based on the information about the current TA in which the terminal is located, whether the slice is allowed to be used in the current TA.

In the method in the above embodiment, the network-side device indicates the slice applicability information at the TA granularity to the terminal by carrying the indication information, slice information, and/or TA information in the second message. In other words, after receiving the request from the terminal, the network-side device can inform, according to the applicability of the slices in multiple TAs under the RA, the terminal of the information about the list of TAs that support the use of slices and/or reject the use of slices based on the slice granularity. It can also inform the terminal of the information that the slice is not applicable in the current TA through indication information (newly added cause value). Thus, after receiving the indication information and/or the information about the list of TAs that support the use of slices and/or reject the use of slices based on the slice granularity, the terminal can accurately determine whether the slice is allowed to be used in the current TA based on the information about the TA where the terminal is currently located. The method in this embodiment of this application achieves accurate indications in various ways on whether the terminal is allowed to use the requested slice within the tracking area TA, with high flexibility.

In one embodiment, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, and the first indication information; and/or,
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, and the first indication information.

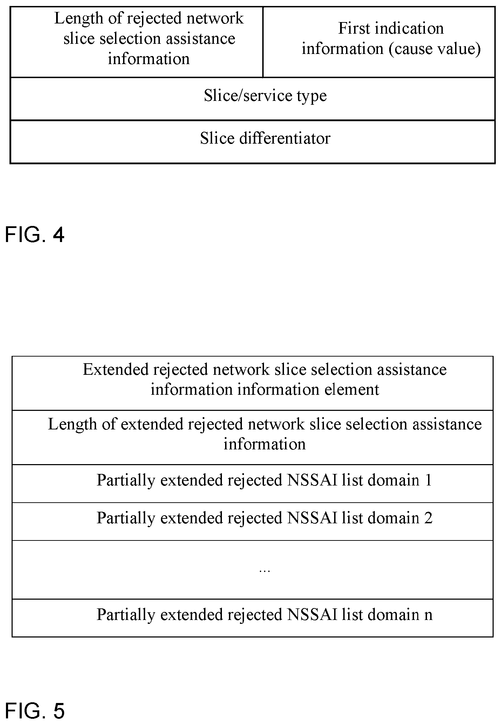

Specifically, the network-side device may indicate to the terminal whether using the first slice in the first TA is supported through the rejected network slice selection assistance information NSSAI information element IE or the first IE in the second message; where the first IE may be a newly defined information element. Optionally, as shown in FIG. 3, the rejected NSSAI IE includes a rejected NSSAI domain corresponding to each first slice in the at least one first slice. As shown in FIG. 4, the rejected NSSAI domain corresponding to each first slice includes at least one of the following: information about the first slice and first indication information. Optionally, the first indication information is 0100 or 0011, indicating that the slice is unusable in the current TA. Optionally, when the indication information is 0000, it indicates that the network slice is unusable in the current network or private network. When the indication information is 0001, it indicates that the network slice is unusable in the current registration area. When the indication information is 0010, it indicates that the slice is unusable due to an authentication and authorization failure or revocation of a specific network slice. Thus, after receiving the rejected NSSAI domain information in the rejected NSSAI IE or the first IE, the terminal can determine that the first slice is unusable in the current TA through the information in the rejected NSSAI domain, so that the terminal can select another slice in the requested slices to establish communication and connection with the network-side device in the current TA.

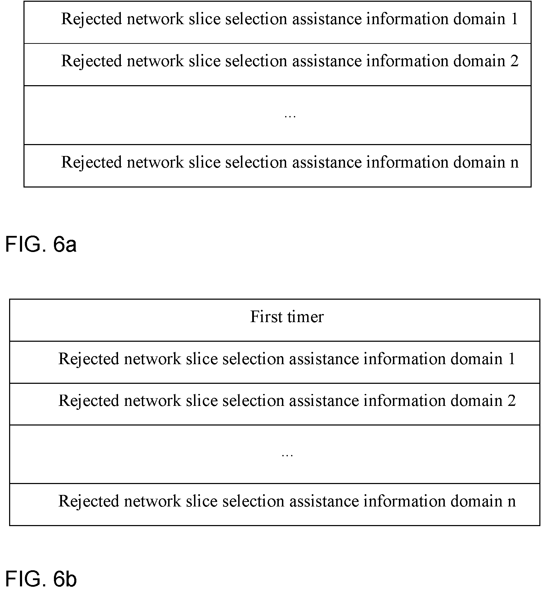

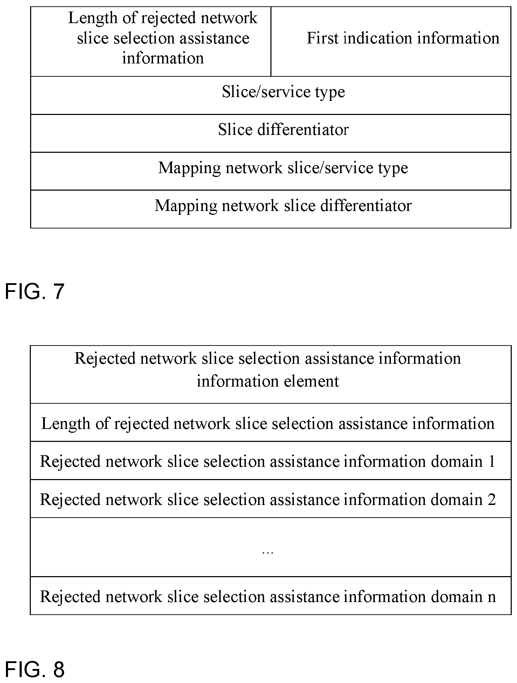

Optionally, the network-side device may indicate to the terminal whether using the first slice in the first TA is supported through the extended rejected NSSAI IE in the second message. Optionally, as shown in FIG. 5, the extended rejected NSSAI IE includes a partially extended rejected NSSAI list domain. As shown in FIGs. 6a and 6b, the partially extended rejected NSSAI list domain includes: a rejected NSSAI domain corresponding to each first slice in the at least one first slice. Optionally, as shown in FIG. 7, the rejected NSSAI domain in the partially extended rejected NSSAI list domain includes at least one of the following: information about the first slice, and first indication information. Optionally, the first indication information is 0100, indicating that the slice is unusable in the current TA. Thus, after receiving the information about the rejected NSSAI domain information in the extended rejected NSSAI IE, the terminal can determine that the first slice is unusable in the current TA through the information in the rejected NSSAI domain, so that the terminal can select another slice in the requested slices to establish communication and connection with the network-side device in the current TA.

In the method in the above embodiment, the network-side device indicates that the slice is unusable in the current TA by carrying the information about the first slice and/or the first indication information in the rejected NSSAI IE, the first IE, or the extended rejected NSSAI IE in the second message. Thus, after receiving the second message, the terminal can determine that the first slice is unusable in the current TA based on the rejected NSSAI IE, the first IE, or the extended rejected NSSAI IE in the second message, so that the terminal can select another slice in the requested slices to establish communication and connection with the network-side device in the current TA. In the embodiments of this application, the network-side device can indicate to the terminal in various ways whether the requested slice is allowed to be used in the tracking area TA, with high flexibility.

In one embodiment, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, the second indication information, and information about the first TA; and/or
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, the second indication information, and information about the first TA.

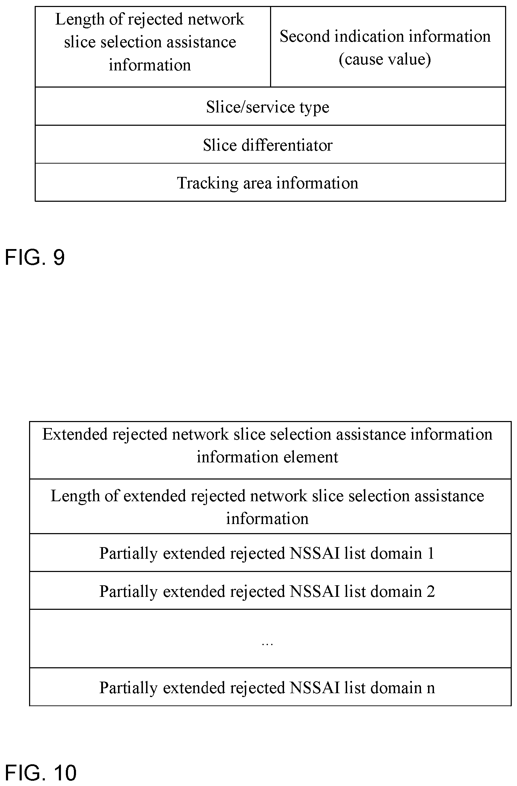

Specifically, the network-side device may indicate to the terminal whether using the requested slice in the target tracking area TA is supported through the rejected network slice selection assistance information NSSAI information element IE or the first IE in the second message; where the first IE may be a newly defined information element. Optionally, as shown in FIG. 8, the rejected NSSAI IE includes a rejected NSSAI domain corresponding to each first slice in the at least one first slice. As shown in FIG. 9, the rejected NSSAI domain corresponding to each first slice includes at least one of the following: information about the first slice, second indication information, and information about the first TA. Optionally, the second indication information is 0100, indicating that the first slice is unusable in the first TA. Thus, after receiving the rejected NSSAI domain information in the rejected NSSAI IE or the first IE in the second message, the terminal can determine that the first slice is unusable in the first TA through the information in the rejected NSSAI domain, so that the terminal can select another slice in the requested slices to establish communication and connection with the network-side device.

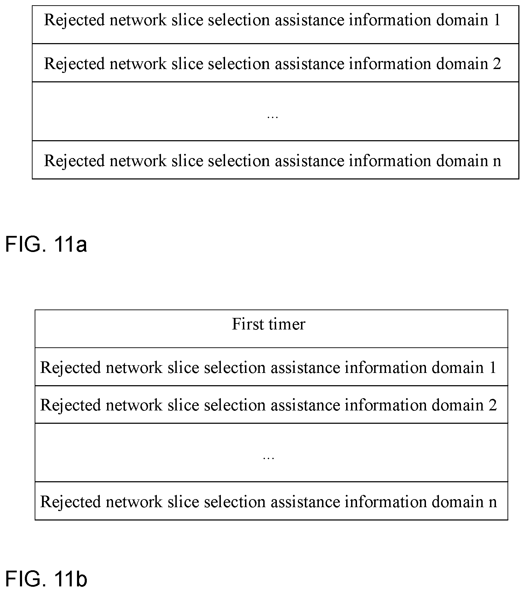

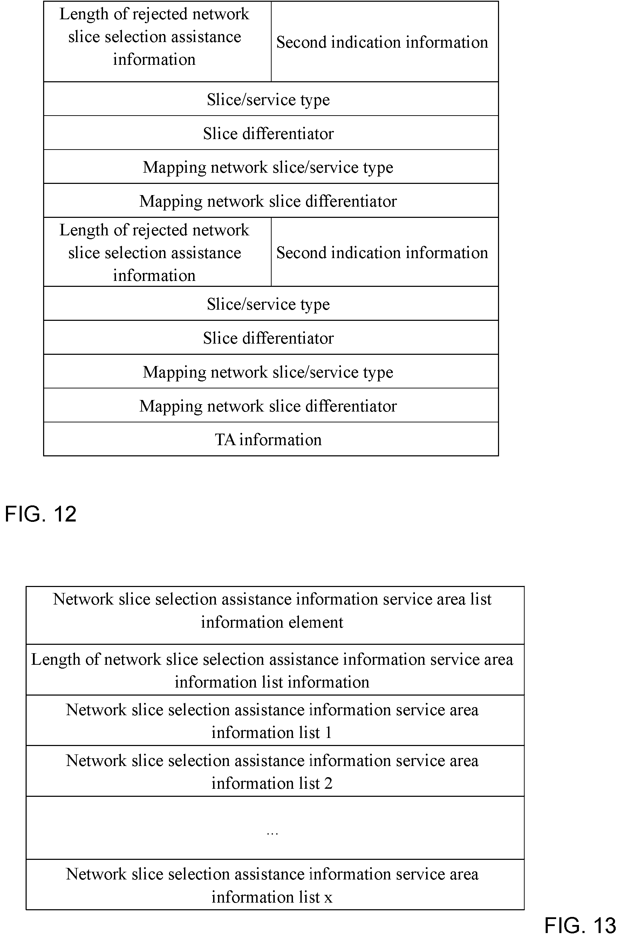

Optionally, the network-side device may also indicate to the terminal whether using the requested slice in the target tracking area TA is supported through the extended rejected NSSAI IE in the second message. Optionally, as shown in FIG. 10, the extended rejected NSSAI IE includes a partially extended rejected NSSAI list domain. As shown in FIGs. 11a and 11b, the partially extended rejected NSSAI list domain includes: a rejected NSSAI domain corresponding to each of the at least one first slice. Optionally, as shown in FIG. 12, the rejected NSSAI domain includes at least one of the following: information about the first slice, second indication information, and information about the first TA; where when the second indication information is 0100, it indicates that the first slice is unusable in the first TA. Thus, after receiving the rejected NSSAI domain information in the extended rejected NSSAI IE, the terminal can determine that the first slice is unusable in the first TA through the information in the rejected NSSAI domain, so that the terminal can select another slice in the requested slices to establish communication and connection with the network-side device.

In the method in the above embodiment, the network-side device indicates that the first slice is unusable in the first TA by carrying the information about the first slice, the second indication information, and/or the information about the first TA in the rejected NSSAI IE, the first IE, or the extended rejected NSSAI IE in the second message. Thus, after receiving the second message, the terminal can determine that the first slice is unusable in the first TA based on the rejected NSSAI IE, the first IE, or the extended rejected NSSAI IE in the second message, so that the terminal can select another slice in the requested slices to establish communication and connection with the network-side device. In the embodiments of this application, the network-side device can indicate to the terminal in various ways whether the requested slice is allowed to be used in the tracking area TA, with high flexibility.

In one embodiment, the second message includes an NSSAI service area list IE, the NSSAI service area list IE includes at least one NSSAI service area list domain, and each NSSAI service area list domain includes: an NSSAI field of the third slice, an NSSAI service area list field, and a target timer field, where the NSSAI service area list field includes at least one of the following: third indication information, and information about the third TA.

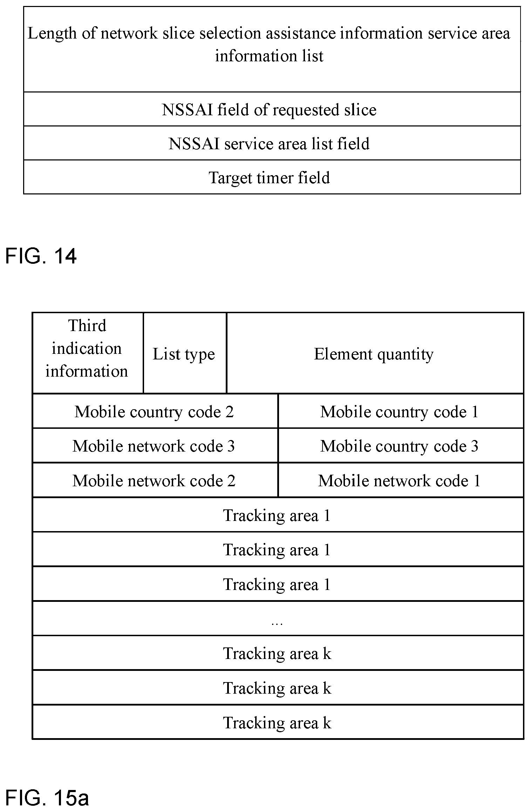

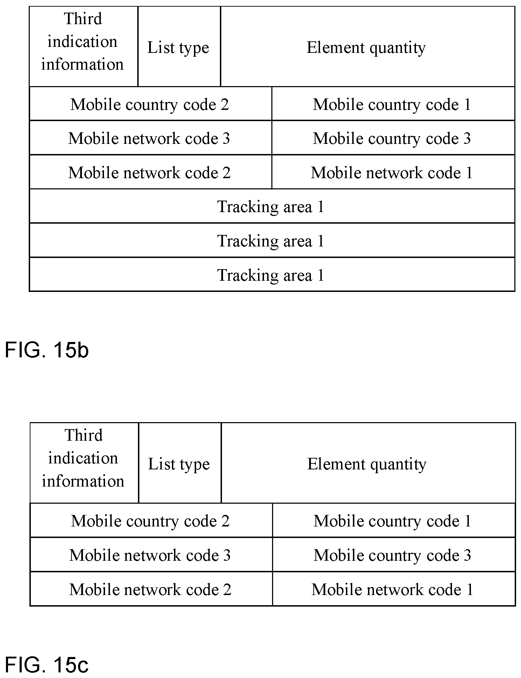

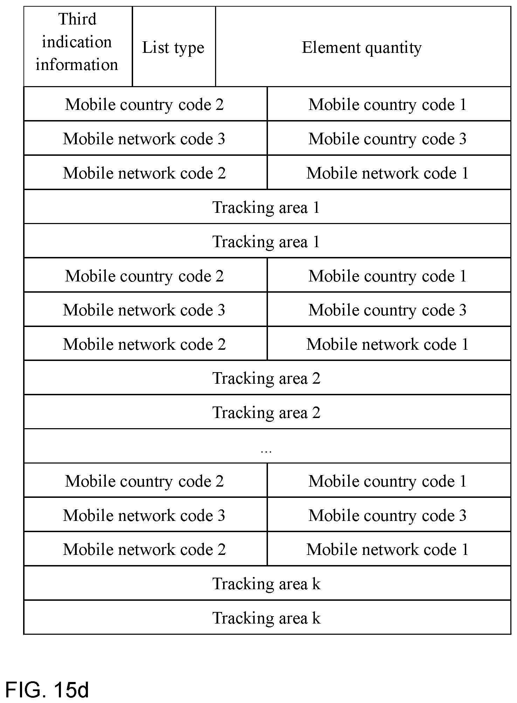

Specifically, the network-side device can indicate to the terminal whether using the third slice in the third TA is supported through the NSSAI service area list IE in the second message. Optionally, as shown in FIG. 13, the NSSAI service area list IE includes at least one NSSAI service area list domain. As shown in FIG. 14, the NSSAI service area list domain includes: an NSSAI field of the third slice, an NSSAI service area list field, and a target timer field. Optionally, when the third indication information indicates that the third TA is a TA that does not support the use of the third slice, the target timer field is carried, and the target timer field is used to indicate that the third slice is unusable in the third TA during the time period corresponding to the target timer field. After the time period corresponding to the target timer field, the terminal can attempt to use the third slice in the third TA. Optionally, as shown in FIGs. 15a to 15d, the NSSAI service area list field includes at least one of the following: third indication information, and information about the third TA. The third indication information is used to indicate that the third TA is a TA that supports the use of the third slice or a TA that does not support the use of the third slice. Optionally, if the third indication information is 0, it indicates that the third TA is a TA that supports the use of the third slice. In this case, when the terminal located is in the third TA, it is allowed to use the third slice. If the third indication information is 1, it indicates that the third TA is a TA that does not support the use of the third slice. In this case, when the terminal is located in the third TA, it is not allowed to use the third slice. Optionally, the terminal starts a timer, where the timer may be set to a default value or its value is configured for the terminal by the network-side device in the NSSAI service area list IE in the second message. Optionally, the third slice is allowed to be used by the terminal only when the terminal has moved out of the third TA or after the timer expires. When the terminal is located in the third TA, it needs to select another slice to establish communication and connection with the network-side device. Optionally, the NSSAI service area list domain further includes: type of list (Type of list) and number of elements (Number of elements), where the type of list is used to indicate the type of the NSSAI service area list domain. For example, it is indicated by at least one bit: 00 indicates a TAC list belonging to one PLMN with non-contiguous TAC values; 01 indicates a TAC list belonging to one PLMN with contiguous TAC values; 10 indicates a TAI list belonging to different PLMNs; and 11 indicates that all TAIs in the registration area belonging to the PLMN are in the allowed area. For example, the format of the NSSAI service area list field may vary for different types of list. As shown in FIGs. 15a and 15b, when the third indication information is used to indicate that the third TA is a TA that does not support the use of the third slice, the number of elements is used to indicate the number of TAs that do not support the use of the third slice included in the NSSAI service area list domain; and when the third indication information is used to indicate that the third TA is a TA that supports the use of the third slice, the number of elements is used to indicate the number of TAs that support the use of the third slice included in the NSSAI service area list domain.

In FIGs. 15a to 15c, the information about tracking area 1 may be represented by one byte or multiple bytes, similar to other tracking areas. In FIGs. 15a to 15c, one line represents one byte, with bits arranged from left to right indicating from the most significant bit to the least significant bit, similar to other figures.

For example, the network-side device carries a TA list of one or more S-NSSAIs in the second message, and indicates that the TA list is a rejected TA list and/or an allowed TA list through indication information. Optionally, the rejected TA list (rejected TAI list) indicates that a slice is rejected for use in the TAs in the rejected TA list, and the allowed TA list (allowed TAI list) indicates that a slice is allowed for use in the TAs in the allowed TA list.

In the method in the above embodiment, the network-side device carries the third indication information and the information about the third TA in the NSSAI service area list IE in the second message, indicating that the third TA is a TA that supports the use of the third slice or does not support the use of the third slice. Thus, after receiving the second message, the terminal can determine whether the slice is available in the third TA based on the NSSAI service area list IE in the second message, achieving the selection and use of slices by the terminal based on the TA granularity, and improving the utilization efficiency of the slices.

In one embodiment, the second message includes an extended allowed NSSAI IE, the extended allowed NSSAI IE includes an allowed NSSAI domain corresponding to each second slice in the at least one second slice, and the allowed NSSAI domain corresponding to each second slice includes at least one of the following: a length of the allowed NSSAI domain, an NSSAI field of the second slice, and information about the second TA.

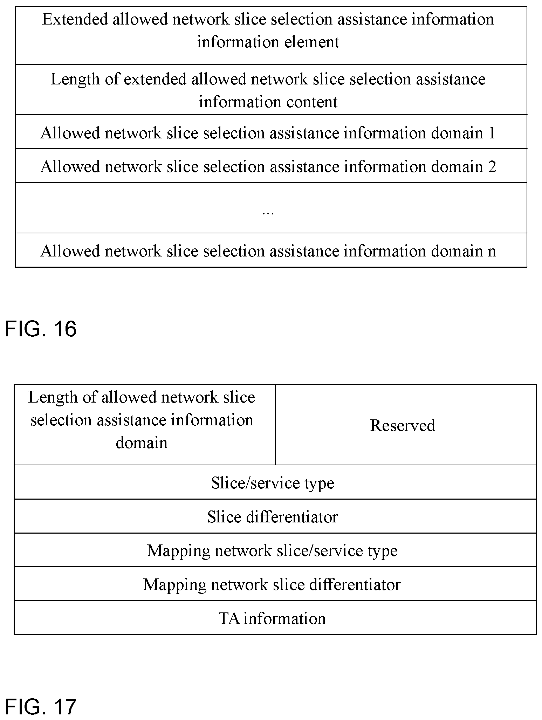

Specifically, the network-side device can indicate to the terminal whether using the second slice in the second TA is supported through the extended allowed NSSAI IE in the second message. Optionally, as shown in FIG. 16, the extended allowed NSSAI IE includes an allowed NSSAI domain corresponding to each of the at least one second slice. As shown in FIG. 17, the allowed NSSAI domain includes at least one of the following: length of the allowed NSSAI domain, NSSAI field of the second slice, and information about the second TA. Thus, after receiving the allowed NSSAI domain information in the extended allowed NSSAI IE, the terminal can determine that the second slice is available in the second TA through the information in the allowed NSSAI domain, achieving the selection and use of slices by the terminal based on the TA granularity.

In the method in the above embodiment, the network-side device carries the NSSAI field of the second slice and the information about the second TA in the extended allowed NSSAI IE in the second message. Thus, after receiving the second message, the terminal can determine that the second slice is available in the second TA based on the extended allowed NSSAI IE in the second message, achieving the selection and use of slices by the terminal based on the TA granularity, improving the utilization efficiency of the slices.

In one embodiment, the first TA includes: a TA that does not support use of the first slice within a preset time range.

Specifically, the first TA includes a TA that does not support the use of the first slice within a preset time range. In other words, the target tracking area TA does not support the use of the first slice within the preset time range. After the preset time range, the terminal can attempt to use the first slice in the target tracking area, making full use of the first slice in the target tracking area TA and improving the utilization efficiency of the slices.

Optionally, the second message further includes information about a first timer; and the first timer is used to indicate that the terminal is allowed to use the first slice in the first TA after the first timer expires.

Specifically, in a case that the first TA includes a TA that does not support the use of the first slice within a preset time range, the network-side device carries the information about the first timer in the second message, where the first timer is used to indicate that the terminal is allowed to use the first slice in the first TA after the first timer expires. Thus, after receiving the first timer in the second message and after the first timer expires, the terminal can attempt to use the first slice in the first TA, making full use of the first slice in the first TA and improving the utilization efficiency of the slices.

In the method in the above embodiment, in a case that the first TA includes a TA that does not support the use of the first slice within a preset time range, the network-side device carries the information about the first timer in the second message. Thus, after receiving the first timer in the second message and after the first timer expires, the terminal can attempt to use the first slice in the first TA, making full use of the first slice in the first TA and improving the utilization efficiency of the slices.

In one embodiment, after the receiving, by the terminal, a second message sent by the network-side device, the method further includes:
sending, by the terminal, a third message to the network-side device; where the third message is used to indicate that the terminal has received the information for indicating whether using the requested slice in a target tracking area TA is supported.

Specifically, after receiving the second message sent by the network-side device, the terminal can send a third message to the network-side device to inform the network-side device that the terminal has received the information indicating whether using the requested slice in the tracking area TA is supported. Thus, the network-side device and the terminal can establish a connection and communication based on a requested slice that is allowed to be used in the target tracking area TA, improving the utilization efficiency of the slices.

In one embodiment, after the receiving, by the terminal, a second message sent by the network-side device, the method further includes at least one of the following:
for each first TA or the current TA, adding, by the terminal, information about a first slice not supported for use in the first TA or current TA to a rejected slice list corresponding to the first TA or current TA;
for each second TA, adding, by the terminal, information about the second slice supported for use in the second TA to an allowed slice list corresponding to the second TA;
storing, by the terminal, information about the first slice and information about the first TA that does not support use of the first slice for each access type;
storing, by the terminal, information about the second slice and information about the second TA that supports use of the second slice for each access type; and
starting a second timer, where the second timer is used to indicate that, after the second timer expires, the terminal removes the first slice from the rejected slice list under the first TA or current TA and the terminal is allowed to use the first slice in the first TA or current TA.

Optionally, if the first message carries the first timer, the value of the second timer is the same as the value of the first timer. For example, the first timer and the second timer have the same start time and the same timing duration. Specifically, if the value of the first timer is 0 or a negative value, the second timer is not started. If the first message does not carry the first timer, the second timer is not started or the second timer is started with a default value.

Specifically, after receiving the second message sent by the network-side device, the terminal can process the slice applicability information indicated in the second message based on information about whether using the requested slice in the target tracking area TA is supported as indicated in the second message. Optionally, the terminal can add at least one first slice to the rejected slice list under its corresponding at least one first TA or the current TA, so that the terminal is not allowed to use the first slice when located in the first TA or current TA and needs to select another slice in the requested slices for use. Optionally, the terminal can store the information about at least one first slice and the information about its corresponding at least one first TA that does not support the use of the first slice for each access type. Optionally, the access type is the 3rd Generation Partnership Project (3rd Generation Partnership Project, 3GPP) access type or non-3GPP access type. In other words, the terminal can store the information about the first slice and the information about the first TA that does not support the use of the first slice, so that the terminal is not allowed to use the first slice when located in the first TA. Correspondingly, the terminal is allowed to use another slice in the requested slices except the first slice when located in the first TA. Optionally, the terminal can store the information about the second slice and the information about the second TA that supports the use of the second slice for each access type, so that the terminal is allowed to use the second slice when located in the second TA, achieving the use of slices based on the TA granularity and improving the utilization efficiency of the slices. Optionally, the terminal starts the second timer, and after the second timer expires, the terminal removes the first slice from the rejected slice list under the first TA or current TA, so that the terminal is allowed to use the first slice in the first **TA** or current TA. In other words, after the second timer expires, the terminal can attempt to use the first slice in the first TA or current TA, making full use of the first slice in the first TA or current TA and improving the utilization efficiency of the slices.

For example, the terminal stores the first slice as a rejected slice in the current tracking area. For each access type, the first slice is stored based on the TA granularity. In other words, the first slice is associated with the TA.

For example, the terminal stores the second slice as an allowed slice in the current tracking area. For each access type, the second slice is stored based on the TA granularity. In other words, the second slice is associated with the TA.

In the method in the above embodiment, after receiving the second message sent by the network-side device, the terminal can process the slice applicability information indicated in the second message, so that the terminal can accurately and effectively select slices for use based on the slice applicability information indicated in the second message and based on the TA granularity, improving the utilization efficiency of the slices.

In one embodiment, for any first slice in the at least one first slice, in a case that the first slice is included in a rejected slice list corresponding to a sixth TA, the sixth TA being any one of the one or more first TAs or the current TA, the terminal is allowed to use the first slice when the terminal meets at least one of the following target conditions:
after the terminal is powered off and restarted;
after the terminal has moved out of the first TA or current TA;
when the terminal is located in the second TA;
after the universal subscriber identity module USIM of the terminal has been removed;
after subscription data of a current network, where the terminal resides, with a network identifier has been updated;
after the first timer expires, where the first timer is configured by the network-side device; and
after the second timer expires, where the second timer is started by the terminal after receiving the second message; where
the first timer or the second timer is used to indicate that the terminal is allowed to use the first slice in the first TA or current TA after the timer expires.

Specifically, to improve the utilization efficiency of the slices, in the embodiments of this application, use of the first slice can be attempted when the following target conditions are met, making full use of the first slice in the tracking area TA and improving the utilization efficiency of the slices. Optionally, after the terminal is powered off and restarted, the terminal can attempt to use the first slice. Optionally, the terminal can attempt to use the first slice after moving out of the first TA or current TA, or when the terminal is located in the second TA. Optionally, after the universal subscriber identity module USIM of the terminal has been removed or after the subscription data of the current network, where the terminal resides, with the network identifier has been updated, the terminal can attempt to use the first slice. Optionally, the network-side device carries the first timer in the second message, and after the first timer or the second timer expires, the terminal can attempt to use the first slice. In other words, when the tracking area TA where the terminal is located changes or the configuration information of the terminal changes, the terminal can attempt to use the first slice, making full use of the first slice in the TA, effectively meeting the need for the terminal and the network-side device to establish a connection and communication, and improving the utilization efficiency of the slices.

For example, if the terminal receives the first TA information based on the slice granularity, the terminal is not allowed to use the first slice in the TA in the first TA information, and the terminal can attempt to use the first slice when it has moved out of the TA in the first TA information.

If the terminal receives the second TA information based on the slice granularity, the terminal is allowed to use the second slice in the TA in the second TA information. The second slice is no longer allowed to be used when the terminal has moved out of the TA in the second TA information and is still under the current RA, and the terminal stores the second slice as a rejected slice in the current tracking area.

If the terminal receives the first TA information based on the slice granularity, the terminal is not allowed to use the first slice in the TA in the first TA. If the terminal is under the TA in the first TA, the terminal moves the first slice into the rejected slice list.

If the terminal receives the second TA information based on the slice granularity, and the terminal is under the TA in the second TA information, the terminal moves the second slice into the allowed slice list, and the terminal is allowed to use the second slice in the second TA.

In the method in the above embodiment, when a target condition is met, the terminal can attempt to use the first slice, making full use of the first slice in the TA, effectively meeting the need for the terminal and the network-side device to establish a connection and communication, and improving the utilization efficiency of the slices.

In one embodiment, in a case that the terminal meets at least one of the target conditions, the terminal performs at least one of the following operations:
removing the first slice from the rejected slice list corresponding to the sixth TA;
updating the first slice as a slice that is allowed to be used in the sixth TA; and
sending a fourth message to the network-side device, where the fourth message includes at least one of the following:
   information about a first target slice expected to be used, and terminal capability indication information; where the terminal capability indication information is used to indicate whether the terminal supports a first capability, and the first capability is a capability of receiving and using information for indicating whether using the requested slice in the target TA is supported.

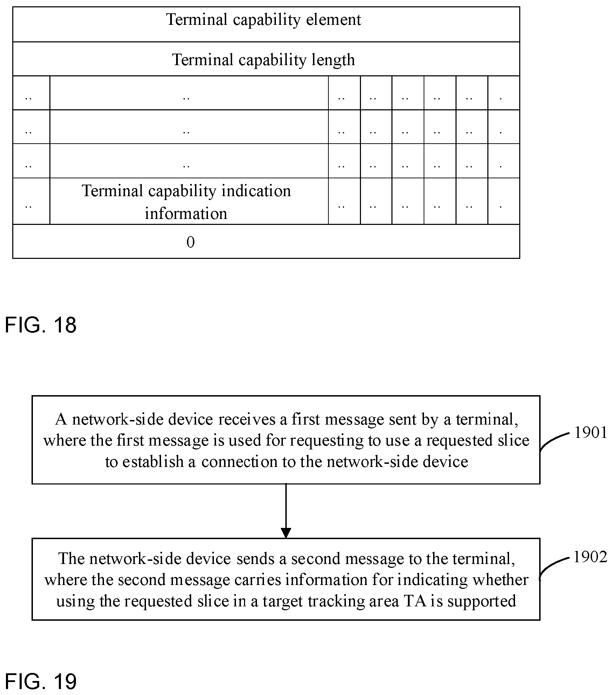

Specifically, when the terminal meets a target condition, the terminal can update the applicability of its stored slices in the TA in a timely manner and attempt to request the use of the first slice in the TA to improve the utilization efficiency of the TA and meet the need for the terminal and the network-side device to establish a connection and communication. Optionally, when a target condition is met, the terminal can remove the first slice from the rejected slice list under the first TA or current TA or update the first slice as a slice that is allowed to be used in the first TA or current TA, so that the terminal can attempt to use the first slice in the first TA or current TA, making full use of the first slice in the TA and improving the utilization efficiency of the slices. Optionally, the terminal can send a fourth message to the network-side device, that is, send the information about the slice expected to be used by the terminal and the terminal capability indication information as shown in FIG. 18 to the network-side device. Optionally, the terminal capability indication information is used to characterize the characteristic of the terminal for support of the network slice extended TA list information, so that the network-side device can indicate, in a timely and accurate manner, to the terminal whether using the requested slice in the target tracking area TA is supported based on the updated requested slice information.

Optionally, if the terminal capability indication information indicates that the terminal supports the first capability, the network-side device carries the information indicating whether using the requested slice in the target tracking area TA is supported in the second message. If the terminal capability indication information indicates that the terminal does not support the first capability, the network-side device does not carry the information indicating whether using the requested slice in the target tracking area TA is supported in the second message.

In the method in the above embodiment, when the terminal meets a target condition, the terminal can update the applicability of its stored slices in the TA in a timely manner and attempt to request the use of a slice in the TA, effectively improving the utilization efficiency of the slices and meeting the need for the terminal and the network-side device to establish a connection and communication.

In one embodiment, the terminal receives the slice information configured by a first target network and sent by the network-side device; and
in a case that the slice information includes information about a second target slice in a rejected slice list corresponding to a fourth TA, the terminal removes the information about the second target slice from the rejected slice list and stops timing of a second timer associated with the information about the second target slice; the fourth TA being a TA corresponding to the first target network.

Specifically, when the terminal receives the new slice configuration information under the first target network (such as the public land mobile network PLMN or the stand-alone non-public network SNPN) sent by the network-side device, if the slice information in the rejected slice list is included in the new slice configuration information under the target PLMN or SNPN network, the terminal deletes the information indicating using the slice in the corresponding TA is not supported from the rejected slice list and stops the timing of the associated timer, so that the terminal can accurately and effectively use the slices in the TA based on the updated slice applicability information, improving the utilization efficiency of the slices.

In the method in the above embodiment, the terminal receives the slice information configured by the first target network and sent by the network-side device, and based on the slice information configured by the first target network and sent by the network-side device, updates the slice information in the rejected slice list stored on the terminal itself, so that the terminal can accurately and effectively use the slices in the TA based on the updated slice applicability information, improving the utilization efficiency of the slices.

In one embodiment, the terminal receives slice information allowed by a second target network sent by the network-side device; and
in a case that the allowed slice information includes information about a third target slice in a rejected slice list under a fifth TA, removing, by the terminal, the information about the third target slice from the rejected slice list and stopping, by the terminal, timing of a second timer associated with the information about the third target slice; the fifth TA being a TA corresponding to the second target network.

Specifically, when the terminal receives the allowed slice information for the network under the second target network (such as the target PLMN or SNPN network) sent by the network-side device, if the slice information in the rejected slice list is included in the allowed slice information for the network under the target PLMN or SNPN network, the terminal deletes the information for indicating using the slice in the corresponding TA is not supported from the rejected slice list and stops timing of the associated timer, so that the terminal can accurately and effectively use the slices in the TA based on the updated slice applicability information, improving the utilization efficiency of the slices.

In the method in the above embodiment, the terminal receives the allowed slice information for the second target network sent by the network-side device and based on the allowed slice information for the second target network sent by the network-side device, updates the slice information in the rejected slice list stored on the terminal itself, so that the terminal can accurately and effectively use the slices in the TA based on the updated slice applicability information, improving the utilization efficiency of the slices.

In one embodiment, the first message includes at least one of the following:
information about the requested slice, and terminal capability indication information; where the terminal capability indication information is used to indicate whether the terminal supports a first capability, and the first capability is a capability of receiving and using information for indicating whether using the requested slice in the target TA is supported.

Specifically, when the terminal sends the first message to the network-side device, the first message may include the information about the requested slice and the terminal capability indication information, where the information about the requested slice is the information about the slice that the terminal requests to use to establish a connection to the network-side device. The terminal capability indication information is used to indicate whether the terminal supports not using the requested slice in the target TA and/or using the requested slice in the target TA, so that after the terminal receives the information about the requested slice and the terminal capability indication information sent by the terminal, it can determine whether it is necessary to indicate the slice applicability information based on the TA granularity to the terminal and/or to accurately indicate the applicability of the requested slice in the target tracking area to the terminal.

In the method in the above embodiment, the terminal sends a second message including the information about the requested slice and the terminal capability indication information to the network-side device, so that the network-side device can determine based on the second message whether it is necessary to indicate the slice applicability information based on the TA granularity to the terminal and/or to accurately indicate the applicability of the requested slice in the target tracking area to the terminal, thereby enabling the terminal and the network-side device to efficiently use the requested slice to establish a connection and communication.

FIG. 19 is a second schematic flowchart of a communication method according to an embodiment of this application. As shown in FIG. 19, the method provided in this embodiment includes:
Step 1901: A network-side device receives a first message sent by a terminal, where the first message is used for requesting to use a requested slice to establish a connection to the network-side device.
Step 1902: The network-side device sends a second message to the terminal, where the second message carries information for indicating whether using the requested slice in a target tracking area TA is supported.

Optionally, the second message includes at least one of the following:
information about at least one first slice and first indication information, where the first indication information is used to indicate that the at least one first slice is unusable in a current TA; where the first slice is a slice in the requested slice, and the target tracking area TA includes the current TA; or
the second message includes at least one of the following:
   information about at least one first slice, information about one or more first TAs corresponding to each first slice in the at least one first slice, information about at least one second slice, information about one or more second TAs corresponding to each second slice in the at least one second slice, and second indication information, where the first TA is a TA that does not support use of the first slice, the second TA is a TA that supports use of the second slice, and the second indication information is used to indicate that the first slice is unusable in the first TA, where the first slice or the second slice is a slice in the requested slice, and the target tracking area TA includes the first TA or the second TA; or
   the second message includes at least one of the following:
      at least one third slice, information about a third TA, and third indication information, where the third indication information is used to indicate that the third TA is a TA that supports use of the third slice or a TA that does not support use of the third slice, the target TA includes the third TA, and the third slice is a slice in the requested slice.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, and the first indication information; and/or,
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, and the first indication information.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, the second indication information, and information about the first TA; and/or
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, the second indication information, and information about the first TA.

Optionally, the second message includes an NSSAI service area list IE, each NSSAI service area list IE includes at least one NSSAI service area list domain, and the NSSAI service area list domain includes: an NSSAI field of the third slice, an NSSAI service area list field, and a target timer field, where the NSSAI service area list field includes at least one of the following: third indication information, and information about the third TA.

Optionally, the second message includes an extended allowed NSSAI IE, the extended allowed NSSAI IE includes an allowed NSSAI domain corresponding to each of the at least one second slice, and the allowed NSSAI domain corresponding to each second slice includes at least one of the following: a length of the allowed NSSAI domain, an NSSAI field of the second slice, and information about the second TA.

Optionally, the first TA includes: a TA that does not support use of the first slice within a preset time range.

Optionally, the second message further includes information about a first timer; and the first timer is used to indicate that the terminal is allowed to use the first slice in the first TA after the first timer expires.

Optionally, the network-side device receives a third message sent by the terminal, where the third message is used to indicate that the terminal has received the information for indicating whether using the requested slice in a target tracking area TA is supported.

Optionally, the first message includes at least one of the following:
information about the requested slice, and terminal capability indication information; where the terminal capability indication information is used to indicate whether the terminal supports a first capability, and the first capability is a capability of receiving and using information for indicating whether using the requested slice in the target TA is supported.

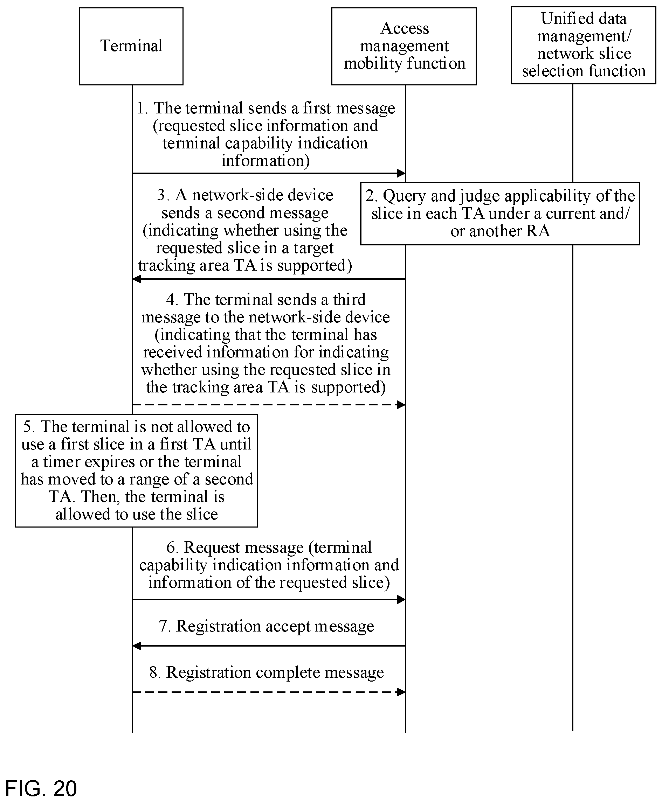

For example, a first schematic flowchart of interaction of a communication method according to an embodiment of this application is shown in FIG. 20:

Step 1. A terminal sends a first message to a first core network element AMF, where the first message is used for establishing an N1 connection between the terminal and a network. Optionally, the first message may be a register request message, and the first message carries at least one of the following:
(1) terminal capability indication information; where the terminal capability indication information is used to indicate whether the terminal supports a first capability, and the first capability is a capability of receiving and using information for indicating whether using the requested slice in a target TA is supported; and
(2) requested slice information, where the requested slice information includes one or more pieces of single network slice selection assistance information S-NSSAI;

When a network-side device (for example the first core network element AMF) receives a slice request from the terminal, it performs at least one of the following operations:
Step 2. The first core network element AMF queries and confirms with a second core network element (for example a unified data management UDM/network slice selection function MSSF) the applicability of the S-NSSAI in the requested slice information in each TA under the current and/or another RA. The applicability refers to whether service is allowed to be provided for the requested slice or service is rejected to be provided for the requested service. If service is allowed to be provided, the slice is placed in the allowed network slice selection assistance information domain allowed S-NSSAI and replied to the terminal. If service is rejected to be provided, the slice is placed in the rejected network slice selection assistance information domain rejected S-NSSAI and replied to the terminal.
Step 3. The first core network element AMF sends a second message to the terminal, where the second message is used to indicate whether the N1 connection between the terminal and the network is successfully established or has failed.

Optionally, the first core network element AMF carries one or more rejected network slice selection assistance information domains rejected S-NSSAI in the second message, where the rejected network slice selection assistance information domain rejected S-NSSAI indicates that the slice is unusable within the current registration area (RA), and carries a first cause value: the slice is unusable in the current registration area. Optionally, it carries timer a, which is used to indicate the terminal that it can attempt to use the slice to initiate a request after timer a expires.

Optionally, the second message may include at least one of the following:
information about at least one first slice, and first indication information; or,
the second message includes at least one of the following:
   information about the at least one first slice, information about the first TA corresponding to each of the at least one first slice, information about the at least one second slice, information about the second TA corresponding to each of the at least one second TA, and second indication information; or,
   the second message includes at least one of the following:
      at least one requested slice, information about the third TA, and third indication information; or,
      In other words, after receiving the request from the terminal, the first core network element AMF informs, according to the applicability of the slices in multiple TAs under the RA, the terminal information about the list of TAs that support the use of slices and/or reject the use of slices based on a slice granularity. After receiving the information about the list of TAs that support the use of slices and/or reject the use of slices based on the slice granularity, the terminal can judge, based on the information about the current TA in which the terminal is located, whether the slice is allowed to be used in the current TA.

Optionally, if the network-side device indicates that the N1 connection between the terminal and the network is successful, the first core network element AMF places the information, that the terminal does not support not using the requested slice in the target TA, in the rejected network slice selection assistance information information element and/or the extended rejected network slice selection assistance information information element and/or a newly defined first IE in the registration complete message and carries it to the terminal, and places the information, that the terminal supports the use of the requested slice in the target TA, in the extended allowed network slice selection assistance information information element and/or a newly defined IE in the registration complete message and carries it to the terminal; and
if the network-side device indicates that the N1 connection between the terminal and the network has failed, the first core network element AMF places the information, that the terminal does not support not using the requested slice in the target TA, in the rejected network slice selection assistance information information element and/or the extended rejected network slice selection assistance information information element and/or a newly defined first IE in the registration reject message and carries it to the terminal.

Step 4. After the terminal receives the second message, if the second message indicates that the **N1** connection between the terminal and the network is successful, and if the second message contains the first TA information and/or the second TA information and/or the indication information based on the slice granularity, the terminal sends a third message to the first core network element AMF, where the third message is used to confirm that the terminal has received the first TA information and/or the second TA information and/or the indication information based on the slice granularity, that is, to confirm that the terminal has received the information indicating whether using the requested slice in the tracking area TA is supported.

Step 5. After receiving the second message, the terminal is not allowed to use the first slice in the first TA until the timer expires or the terminal has moved to the range of the second TA. Then, the terminal is allowed to use the slice.

Step 6. When an above usage condition is met, the terminal is allowed to use the first slice, and the terminal performs at least one of the following operations:
(1) removing the first slice from the rejected slice list in the current tracking area, and after the removal, the slice is allowed to be used for normal requests; and
(2) according to business needs and slice selection, sending one of the following indication information to the first core network element AMF for mobility or periodic registration update:

Optionally, the terminal sends a fourth message to the network-side device, where the fourth message is a request message, including at least one of the following:
A. terminal capability indication information, where the terminal capability indication information is used to indicate that the terminal supports the function of initiating a slice request in a supported TA under the same RA, where the function of initiating a slice request in a supported TA under the same RA means that when the requested slice is rejected in the current TA but is acceptable in another TA under the same RA, the terminal can use the requested slice when it has moved to the another TA; and
B. information of the requested slice, where the information of the requested slice includes one or more first slices.

Step 7. After receiving the terminal message, the first core network element AMF confirms that service is allowed to be provided to the requested slice in the current network, and then indicates that the N1 connection between the terminal and the network is successful. Optionally, the fifth message contains information about the first slice that is allowed to be used in the target tracking area; optionally, the fifth message may be a registration accept message.

Step 8. After receiving the registration accept message, the terminal sends a sixth message to the first core network element AMF, where the sixth message is used to confirm that the terminal has received the information indicating whether the terminal supports not using the requested slice in the target TA and/or using the requested slice in the target TA. Optionally, the sixth message may be a registration complete message.

The communication method provided in the embodiments of this application may be performed by a virtual apparatus. In this embodiment of this application, the communication apparatus provided in the embodiments of this application is described by using the communication method being executed by the virtual apparatus as an example.

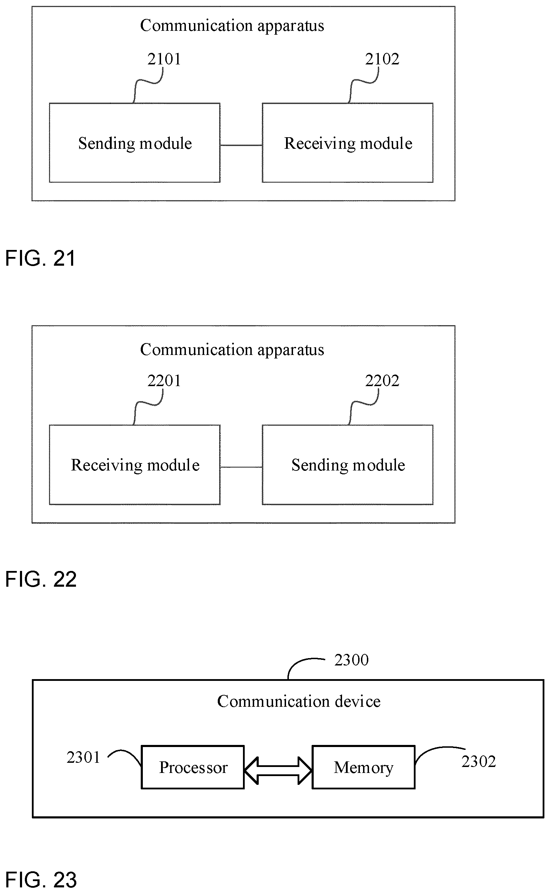

FIG. 21 is a first schematic structural diagram of a communication apparatus according to an embodiment of this application. As shown in FIG. 21, the communication apparatus provided in this embodiment includes:
a sending module 2101, configured to send a first message to a network-side device, where the first message is used for requesting to use a requested slice to establish a connection to the network-side device; and
a receiving module 2102, configured to receive a second message sent by the network-side device, where the second message carries information for indicating whether using the requested slice in a target tracking area TA is supported.

Optionally, the second message includes at least one of the following:
information about at least one first slice and first indication information, where the first indication information is used to indicate that the at least one first slice is unusable in a current TA; where the first slice is a slice in the requested slice, and the target tracking area TA includes the current TA; or
the second message includes at least one of the following:
   information about at least one first slice, information about one or more first TAs corresponding to each first slice in the at least one first slice, information about at least one second slice, information about one or more second TAs corresponding to each second slice in the at least one second slice, and second indication information, where the first TA is a TA that does not support use of the first slice, the second TA is a TA that supports use of the second slice, and the second indication information is used to indicate that the first slice is unusable in the first TA, where the first slice or the second slice is a slice in the requested slice, and the target tracking area TA includes the first TA or the second TA; or
   the second message includes at least one of the following:
      information about at least one third slice, information about a third TA, and third indication information, where the third indication information is used to indicate that the third TA is a TA that supports use of the third slice or a TA that does not support use of the third slice, the target TA includes the third TA, and the third slice is a slice in the requested slice.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, and the first indication information; and/or,
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, and the first indication information.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, the second indication information, and information about the first TA; and/or
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, the second indication information, and information about the first TA.

Optionally, the second message includes an NSSAI service area list IE, the NSSAI service area list IE includes at least one NSSAI service area list domain, and each NSSAI service area list domain includes: an NSSAI field of the third slice, an NSSAI service area list field, and a target timer field, where the NSSAI service area list field includes at least one of the following: third indication information, and information about the third TA.

Optionally, the second message includes an extended allowed NSSAI IE, the extended allowed NSSAI IE includes an allowed NSSAI domain corresponding to each of the at least one second slice, and the allowed NSSAI domain corresponding to each second slice includes at least one of the following: a length of the allowed NSSAI domain, an NSSAI field of the second slice, and information about the second TA.

Optionally, the first TA includes: a TA that does not support use of the first slice within a preset time range.

Optionally, the second message further includes information about a first timer; and the first timer is used to indicate that the terminal is allowed to use the first slice in the first TA after the first timer expires.

Optionally, the sending module 2101 is further configured to send a third message to the network-side device; where the third message is used to indicate that the terminal has received the information for indicating whether using the requested slice in a target tracking area TA is supported.

Optionally, the receiving module 2102 is configured to, for each first TA or the current TA, add information about a first slice not supported for use in the first TA or current TA to a rejected slice list corresponding to the first TA or current TA;
for each second TA, add information about the second slice supported for use in the second TA to an allowed slice list corresponding to the second TA;
store information about the first slice and information about the first TA that does not support use of the first slice for each access type;
store information about the second slice and information about the second TA that supports use of the second slice for each access type; and
start a second timer, where the second timer is used to indicate that the terminal is allowed to use the first slice in the first TA or current TA after the second timer expires.

Optionally, the receiving module 2102 is further configured to, for any first slice in the at least one first slice, in a case that the first slice is included in a rejected slice list corresponding to a sixth TA, the sixth TA being any one of the one or more first TAs or the current TA, the first slice is allowed to be used when at least one of the following target conditions is met:
after the terminal is powered off and restarted;
after the terminal has moved out of the first TA or current TA;
when the terminal is located in the second TA;
after the universal subscriber identity module USIM of the terminal has been removed;
after subscription data of a current network, where the terminal resides, with a network identifier has been updated;
after the first timer expires, where the first timer is configured by the network-side device; and
after the second timer expires, where the second timer is started by the terminal after receiving the second message; where
the first timer or the second timer is used to indicate that the terminal is allowed to use the first slice in the first TA or current TA after the timer expires.

Optionally, the receiving module 2102 is further configured to, in a case that at least one of the target conditions is met, perform at least one of the following operations:
removing the first slice from the rejected slice list corresponding to the sixth TA;
updating the first slice as a slice that is allowed to be used in the sixth TA; and
sending a fourth message to the network-side device, where the fourth message includes at least one of the following:
   information about a first target slice expected to be used, and terminal capability indication information; where the terminal capability indication information is used to indicate whether the terminal supports a first capability, and the first capability is a capability of receiving and using information for indicating whether using the requested slice in the target TA is supported.

Optionally, the receiving module 2102 is further configured to receive the slice information configured by a first target network and sent by the network-side device; and
in a case that the slice information includes information about a second target slice in a rejected slice list corresponding to a fourth TA, remove the information about the second target slice from the rejected slice list and stop timing of a second timer associated with the information about the second target slice; the fourth TA being a TA corresponding to the first target network.

Optionally, the receiving module 2102 is further configured to receive the allowed slice information for a second target network sent by the network-side device; and
in a case that the allowed slice information includes information about a third target slice in a rejected slice list corresponding to a fifth TA, remove the information about the third target slice from the rejected slice list and stop timing of a second timer associated with the information about the third target slice; the fifth TA being a TA corresponding to the second target network.

Optionally, the first message includes at least one of the following:
information about the requested slice, and terminal capability indication information; where the terminal capability indication information is used to indicate whether the terminal supports a first capability, and the first capability is a capability of receiving and using information for indicating whether using the requested slice in the target TA is supported.

The apparatus in this embodiment can be used to execute the method of any one of the embodiments in the foregoing terminal-side method embodiments, and its specific implementation process and technical effects are the same as the specific implementation process and technical effects in the first device-side method embodiments. For details, refer to detailed descriptions in the terminal-side method embodiments, which are not repeated herein.

FIG. 22 is a second schematic structural diagram of a communication apparatus according to an embodiment of this application. As shown in FIG. 22, the communication apparatus provided in this embodiment includes:
a receiving module 2201, configured to receive a first message sent by a terminal, where the first message is used for requesting to use a requested slice to establish a connection to the network-side device; and
a sending module 2202, configured to send a second message to the terminal, where the second message carries information for indicating whether using the requested slice in a target tracking area TA is supported.

Optionally, the second message includes at least one of the following:
information about at least one first slice and first indication information, where the first indication information is used to indicate that the at least one first slice is unusable in a current TA; where the first slice is a slice in the requested slice, and the target tracking area TA includes the current TA; or
the second message includes at least one of the following:
   information about at least one first slice, information about one or more first TAs corresponding to each first slice in the at least one first slice, information about at least one second slice, information about one or more second TAs corresponding to each second slice in the at least one second slice, and second indication information, where the first TA is a TA that does not support use of the first slice, the second TA is a TA that supports use of the second slice, and the second indication information is used to indicate that the first slice is unusable in the first TA, where the first slice or the second slice is a slice in the requested slice, and the target tracking area TA includes the first TA or the second TA; or
   the second message includes at least one of the following:
      at least one third slice, information about a third TA, and third indication information, where the third indication information is used to indicate that the third TA is a TA that supports use of the third slice or a TA that does not support use of the third slice, the target TA includes the third TA, and the third slice is a slice in the requested slice.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, and the first indication information; and/or,
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, and the first indication information.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, the second indication information, and information about the first TA; and/or
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, the second indication information, and information about the first TA.

Optionally, the second message includes an NSSAI service area list IE, the NSSAI service area list IE includes at least one NSSAI service area list domain, and each NSSAI service area list domain includes: an NSSAI field of the third slice, an NSSAI service area list field, and a target timer field, where the NSSAI service area list field includes at least one of the following: third indication information, and information about the third TA.

Optionally, the second message includes an extended allowed NSSAI IE, the extended allowed NSSAI IE includes an allowed NSSAI domain corresponding to each of the at least one second slice, and the allowed NSSAI domain corresponding to each second slice includes at least one of the following: a length of the allowed NSSAI domain, an NSSAI field of the second slice, and information about the second TA.

Optionally, the first TA includes: a TA that does not support use of the first slice within a preset time range.

Optionally, the second message further includes information about a first timer; and the first timer is used to indicate that the terminal is allowed to use the first slice in the first TA after the first timer expires.

Optionally, the receiving module 2201 is further configured to receive a third message sent by the terminal; where the third message is used to indicate that the terminal has received the information for indicating whether using the requested slice in a target tracking area TA is supported.

The first message includes at least one of the following:
information about the requested slice, and terminal capability indication information; where the terminal capability indication information is used to indicate whether the terminal supports a first capability, and the first capability is a capability of receiving and using information for indicating whether using the requested slice in the target TA is supported.

The apparatus in this embodiment can be used to execute the method of any one of the embodiments in the foregoing network device-side method embodiments, and its specific implementation process and technical effects are the same as the specific implementation process and technical effects in the first device-side method embodiments. For details, refer to detailed descriptions in the network device-side method embodiments, which are not repeated herein.

The communication apparatus in the embodiments of this application may be an electronic device, for example an electronic device having an operating system, or may be a component of an electronic device, for example, an integrated circuit or a chip. The electronic device may be a terminal or a device other than terminals. For example, the terminal may include but is not limited to the types of the terminal 11 listed above, and the other devices may be servers, network attached storage (Network Attached Storage, NAS), or the like, which are not specifically limited in the embodiments of this application.

Optionally, as shown in FIG. 23, an embodiment of this application further provides a communication device 2300 including a processor 2301 and a memory 2302. The memory 2302 stores a program or instruction executable on the processor 2301. For example, when the communication device 2300 is a terminal, when the program or instruction is executed by the processor 2301, the steps of the foregoing embodiment of the communication method are implemented, with the same technical effects achieved. When the communication device 2300 is a network-side device, the program or instruction is executed by the processor 2301 to implement the processes in the foregoing embodiment of the communication method, with the same technical effects achieved. To avoid repetition, details are not described herein again.

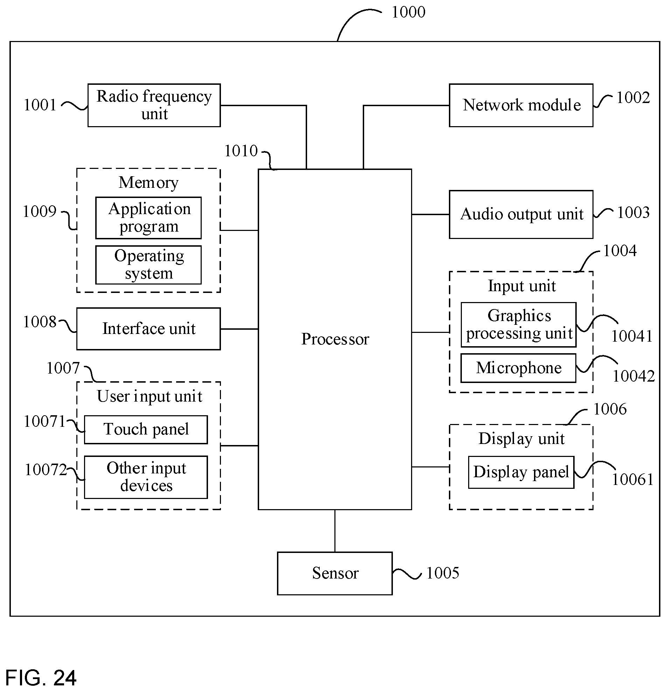

An embodiment of this application further provides a terminal, including a processor and a communication interface, where the communication interface is configured to send a first message to a network-side device, the first message being used for requesting to use a requested slice to establish a connection to the network-side device; and receive a second message sent by the network-side device, the second message carrying information indicating whether using the requested slice use in a target tracking area TA is supported. This terminal embodiment corresponds to the foregoing method embodiment on the terminal side. All processes and implementations in the foregoing method embodiment are applicable to this terminal embodiment, with the same technical effect achieved. Specifically, FIG. 24 is a schematic diagram of a hardware structure of a terminal implementing the embodiments of this application.

The terminal 1000 includes but is not limited to at least part of these components: a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 24 does not constitute any limitation on the terminal, and the terminal may include more or fewer components than shown in the figure, or combine some of the components, or have different arrangements of the components. Details are not described herein.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, volume control button or on/off button), a trackball, a mouse, and a joystick. Details are not described herein.

In this embodiment of this application, after receiving downlink data from a network-side device, the radio frequency unit 1001 transfers the data to the processor 1010 for processing; and the radio frequency unit 1001 can additionally send uplink data to the network-side device. Generally, the radio frequency unit 1001 includes but is not limited to an antenna, at least one amplifier, a transceiver, a coupler, a low noise amplifier, and a duplexer.

The memory 1009 may be configured to store software programs or instructions and various data. The memory 1009 may include a first storage area for storing programs or instructions and a second storage area for storing data. The first storage area for storing programs or instructions may store an operating system, an application program or instruction required by at least one function (for example, a sound play function or an image play function), and the like. Additionally, the memory 1009 may be a volatile memory or a non-volatile memory, or the memory 1009 may include both a volatile memory and a non-volatile memory. The memory 1009 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of this application includes but is not be limited to these or any other applicable types of memories, for example, at least one magnetic disk storage device, flash memory device, or other non-volatile solid-state storage device.

The processor 1010 may include one or more processing units. Optionally, the processor 1010 may integrate an application processor and a modem processor. The application processor primarily processes operations involving an operating system, user interface, application program, instruction, or the like. The modem processor primarily processes radio communication signals, for example, being a baseband processor. It can be understood that the modem processor may alternatively be not integrated in the processor 1010.

The radio frequency unit 1001 is configured to send a first message to a network-side device, where the first message is used for requesting to use a requested slice to establish a connection to the network-side device; and
receive a second message sent by the network-side device, where the second message carries information for indicating whether using the requested slice in a target tracking area TA is supported.

Optionally, the second message includes at least one of the following:
information about at least one first slice and first indication information, where the first indication information is used to indicate that the at least one first slice is unusable in a current TA; where the first slice is a slice in the requested slice, and the target tracking area TA includes the current TA; or
the second message includes at least one of the following:
   information about at least one first slice, information about one or more first TAs corresponding to each first slice in the at least one first slice, information about at least one second slice, information about one or more second TAs corresponding to each second slice in the at least one second slice, and second indication information, where the first TA is a TA that does not support use of the first slice, the second TA is a TA that supports use of the second slice, and the second indication information is used to indicate that the first slice is unusable in the first TA, where the first slice or the second slice is a slice in the requested slice, and the target tracking area TA includes the first TA or the second TA; or
   the second message includes at least one of the following:
      information about at least one third slice, information about a third TA, and third indication information, where the third indication information is used to indicate that the third TA is a TA that supports use of the third slice or a TA that does not support use of the third slice, the target TA includes the third TA, and the third slice is a slice in the requested slice.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, and the first indication information; and/or,
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, and the first indication information.

Optionally, the second message includes a rejected network slice selection assistance information NSSAI information element IE or a first IE, the rejected NSSAI IE or the first IE includes a rejected NSSAI domain corresponding to each first slice in the at least one first slice, and the rejected NSSAI domain corresponding to each first slice includes at least one of the following: information about the first slice, the second indication information, and information about the first TA; and/or
the second message includes an extended rejected NSSAI IE, the extended rejected NSSAI IE includes a partially extended rejected NSSAI list domain, the partially extended rejected NSSAI list domain includes a rejected NSSAI domain corresponding to each first slice in the at least one first slice, and the rejected NSSAI domain corresponding to each first slice includes at least one of the following: information about the first slice, the second indication information, and information about the first TA.

Optionally, the second message includes an NSSAI service area list IE, the NSSAI service area list IE includes at least one NSSAI service area list domain, and each NSSAI service area list domain includes: an NSSAI field of the third slice, an NSSAI service area list field, and a target timer field, where the NSSAI service area list field includes at least one of the following: third indication information, and information about the third TA.

Optionally, the second message includes an extended allowed NSSAI IE, the extended allowed NSSAI IE includes an allowed NSSAI domain corresponding to each of the at least one second slice, and the allowed NSSAI domain corresponding to each second slice includes at least one of the following: a length of the allowed NSSAI domain, an NSSAI field of the second slice, and information about the second TA.

Optionally, the first TA includes: a TA that does not support use of the first slice within a preset time range.

Optionally, the second message further includes information about a first timer; and the first timer is used to indicate that the terminal is allowed to use the first slice in the first TA after the first timer expires.

Optionally, the radio frequency unit 1001 is further configured to send a third message to the network-side device; where the third message is used to indicate that the terminal has received the information for indicating whether using the requested slice in a target tracking area TA is supported.

Optionally, the processor 1010 is further configured to:
for each first TA or the current TA, adding, by the terminal, information about a first slice not supported for use in the first TA or current TA to a rejected slice list corresponding to the first TA or current TA;
for each second TA, add information about the second slice supported for use in the second TA to an allowed slice list corresponding to the second TA;
store information about the first slice and information about the first TA that does not support use of the first slice for each access type;
store information about the second slice and information about the second TA that supports use of the second slice for each access type; and
start a second timer, where the second timer is used to indicate that the terminal is allowed to use the first slice in the first TA or current TA after the second timer expires.

Optionally, the processor 1010 is further configured to, for any first slice in the at least one first slice, in a case that the first slice is included in a rejected slice list corresponding to a sixth TA, the sixth TA being any one of the one or more first TAs or the current TA, the first slice is allowed to be used when at least one of the following target conditions is met:
after the terminal is powered off and restarted;
after the terminal has moved out of the first TA or current TA;
when the terminal is located in the second TA;
after the universal subscriber identity module USIM of the terminal has been removed;
after subscription data of a current network, where the terminal resides, with a network identifier has been updated;
after the first timer expires, where the first timer is configured by the network-side device; and
after the second timer expires, where the second timer is started by the terminal after receiving the second message; where
the first timer or the second timer is used to indicate that the terminal is allowed to use the first slice in the first TA or current TA after the timer expires.

Optionally, the processor 1010 is further configured to, in a case that at least one of the target conditions is met, perform at least one of the following operations:
removing the first slice from the rejected slice list corresponding to the sixth TA;
updating the first slice as a slice that is allowed to be used in the sixth TA; and
sending a fourth message to the network-side device, where the fourth message includes at least one of the following:
   information about a first target slice expected to be used, and terminal capability indication information; where the terminal capability indication information is used to indicate whether the terminal supports a first capability, and the first capability is a capability of receiving and using information for indicating whether using the requested slice in the target TA is supported.

Optionally, the radio frequency unit 1001 is further configured to receive the slice information configured by a first target network and sent by the network-side device; and
in a case that the slice information includes information about a second target slice in a rejected slice list corresponding to a fourth TA, remove the information about the second target slice from the rejected slice list and stop timing of a second timer associated with the information about the second target slice; the fourth TA being a TA corresponding to the first target network.

Optionally, the radio frequency unit 1001 is further configured to receive the allowed slice information configured for a second target network and sent by the network-side device; and
in a case that the allowed slice information includes information about a third target slice in a rejected slice list corresponding to a fifth TA, remove the information about the third target slice from the rejected slice list and stop timing of a second timer associated with the information about the third target slice; the fifth TA being a TA corresponding to the second target network.

Optionally, the first message includes at least one of the following:
information about the requested slice, and terminal capability indication information; where the terminal capability indication information is used to indicate whether the terminal supports a first capability, and the first capability is a capability of receiving and using information for indicating whether using the requested slice in the target TA is supported.

An embodiment of this application further provides a network-side device, including a processor and a communication interface, where the communication interface is configured to receive a first message sent by a terminal, the first message being used for requesting to use a requested slice to establish a connection to the network-side device; and send a second message to the terminal, the second message carrying information indicating whether using the requested slice in a target tracking area TA is supported. This network-side device embodiment corresponds to the foregoing network-side device method embodiment. All processes and implementations in the foregoing method embodiment are applicable to this network-side device embodiment, with the same technical effect achieved.

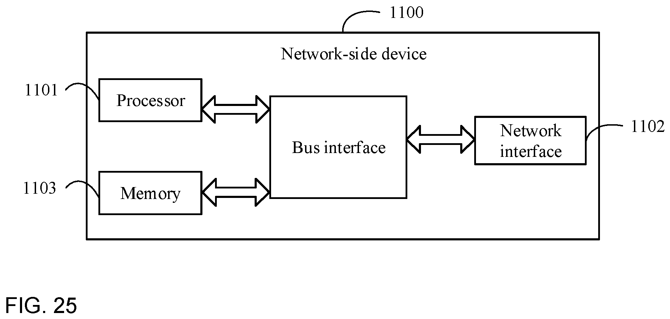

Specifically, an embodiment of this application further provides a network-side device. As shown in FIG. 25, the network-side device 1100 includes a processor 1101, a network interface 1102, and memory 1103. The network interface 1102 is, for example, a common public radio interface (Common Public Radio Interface, CPRI).

Specifically, the network-side device 1100 in this embodiment of this application further includes: an instruction or program stored in the memory 1103 and executable on the processor 1101. The processor 1101 invokes the instruction or program in the memory 1103 to execute the method executed by the modules shown in FIG. 22, with the same technical effects achieved. To avoid repetition, details are not described herein again.

An embodiment of this application further provides a readable storage medium. The readable storage medium stores a program or instruction, and when the program or instruction is executed by a processor, the processes of the foregoing communication method embodiments are implemented, with the same technical effects achieved. To avoid repetition, details are not described herein again.

The processor is a processor in the terminal in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement each process of the foregoing communication method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing communication method embodiments, with the same technical effects achieved. To avoid repetition, details are not described herein again.

An embodiment of this application further provides a communication system including a terminal and a network-side device. The terminal may be configured to execute the foregoing communication method, and the network-side device may be configured to execute the steps of the foregoing communication method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A communication method, comprising:
sending, by a terminal, a first message to a network-side device, wherein the first message is used for requesting to use a requested slice to establish a connection to the network-side device; and
receiving, by the terminal, a second message sent by the network-side device, wherein the second message carries information for indicating whether using the requested slice in a target tracking area TA is supported.

2. The communication method according to claim 1, wherein
the second message comprises at least one of the following:
information about at least one first slice and first indication information, wherein the first indication information is used to indicate that the at least one first slice is unusable in a current TA; wherein the first slice is a slice in the requested slice, and the target tracking area TA comprises the current TA; or
the second message comprises at least one of the following:
information about at least one first slice, information about one or more first TAs corresponding to each first slice in the at least one first slice, information about at least one second slice, information about one or more second TAs corresponding to each second slice in the at least one second slice, and second indication information, wherein the first TA is a TA that does not support use of the first slice, the second TA is a TA that supports use of the second slice, and the second indication information is used to indicate that the first slice is unusable in the first TA, wherein the first slice or the second slice is a slice in the requested slice, and the target tracking area TA comprises the first TA or the second TA; or
the second message comprises at least one of the following:
information about at least one third slice, information about a third TA, and third indication information, wherein the third indication information is used to indicate that the third TA is a TA that supports use of the third slice or a TA that does not support use of the third slice, the target TA comprises the third TA, and the third slice is a slice in the requested slice.

3. The communication method according to claim 2, wherein
the second message comprises a rejected network slice selection assistance information NSSAI information element IE or a first IE, the rejected NSSAI IE or the first IE comprises a rejected NSSAI domain corresponding to each first slice in the at least one first slice, and the rejected NSSAI domain corresponding to each first slice comprises at least one of the following: information about the first slice, and the first indication information; and/or,
the second message comprises an extended rejected NSSAI IE, the extended rejected NSSAI IE comprises a partially extended rejected NSSAI list domain, the partially extended rejected NSSAI list domain comprises a rejected NSSAI domain corresponding to each first slice in the at least one first slice, and the rejected NSSAI domain corresponding to each first slice comprises at least one of the following: information about the first slice, and the first indication information.

4. The communication method according to claim 2, wherein
the second message comprises a rejected network slice selection assistance information NSSAI information element IE or a first IE, the rejected NSSAI IE or the first IE comprises a rejected NSSAI domain corresponding to each first slice in the at least one first slice, and the rejected NSSAI domain corresponding to each first slice comprises at least one of the following:
information about the first slice, the second indication information, and
information about the first TA; and/or
the second message comprises an extended rejected NSSAI IE, the extended rejected NSSAI IE comprises a partially extended rejected NSSAI list domain, the partially extended rejected NSSAI list domain comprises a rejected NSSAI domain corresponding to each first slice in the at least one first slice, and the rejected NSSAI domain corresponding to each first slice comprises at least one of the following: information about the first slice, the second indication information, and information about the first TA.

5. The communication method according to claim 2, wherein
the second message comprises an NSSAI service area list IE, the NSSAI service area list IE comprises at least one NSSAI service area list domain, and each NSSAI service area list domain comprises: an NSSAI field of the third slice, an NSSAI service area list field, and a target timer field, wherein the NSSAI service area list field comprises at least one of the following: third indication information, and information about the third TA.

6. The communication method according to claim 2, wherein
the second message comprises an extended allowed NSSAI IE, the extended allowed NSSAI IE comprises an allowed NSSAI domain corresponding to each of the at least one second slice, and the allowed NSSAI domain corresponding to each second slice comprises at least one of the following: a length of the allowed NSSAI domain, an NSSAI field of the second slice, and information about the second TA.

7. The communication method according to any one of claims 2 to 6,
wherein the first TA comprises: a TA that does not support use of the first slice within a preset time range.

8. The communication method according to claim 7, wherein
the second message further comprises information about a first timer; and the first timer is used to indicate that the terminal is allowed to use the first slice in the first TA after the first timer expires.

9. The communication method according to any one of claims 1 to 6, wherein after the receiving, by the terminal, a second message sent by the network-side device, the method further comprises:
sending, by the terminal, a third message to the network-side device; wherein the third message is used to indicate that the terminal has received the information for indicating whether using the requested slice in the target tracking area TA is supported.

10. The communication method according to any one of claims 2 to 6, wherein after the receiving, by the terminal, a second message sent by the network-side device, the method further comprises at least one of the following:
for each first TA or the current TA, adding, by the terminal, information about a first slice not supported for use in the first TA or current TA to a rejected slice list corresponding to the first TA or the current TA;
for each second TA, adding, by the terminal, information about the second slice supported for use in the second TA to an allowed slice list corresponding to the second TA;
storing, by the terminal, information about the first slice and information about the first TA that does not support use of the first slice for each access type;
storing, by the terminal, information about the second slice and information about the second TA that supports use of the second slice for each access type; and
starting a second timer, wherein the second timer is used to indicate that the terminal is allowed to use the first slice in the first TA or current TA after the second timer expires.

11. The communication method according to any one of claims 2 to 6,
wherein for any first slice in the at least one first slice, in a case that the first slice is comprised in a rejected slice list corresponding to a sixth TA, the sixth TA being any one of the one or more first TAs or the current TA, the terminal is allowed to use the first slice when the terminal meets at least one of the following target conditions:
after the terminal is powered off and restarted;
after the terminal has moved out of the first TA or current TA;
when the terminal is located in the second TA;
after a universal subscriber identity module USIM of the terminal has been removed;
after subscription data, with a network identifier, of a current network in which the terminal is located has been updated;
after the first timer expires, wherein the first timer is configured by the network-side device; and
after the second timer expires, wherein the second timer is started by the terminal after the second message is received; wherein
the first timer or the second timer is used to indicate that the terminal is allowed to use the first slice in the first TA or current TA after the timer expires.

12. The communication method according to claim 11, wherein in a case that the terminal meets at least one of the target conditions, the method further comprises:
performing, by the terminal, at least one of the following operations:
removing the first slice from the rejected slice list corresponding to the sixth TA;
updating the first slice to a slice that is allowed to be used in the sixth TA; and
sending a fourth message to the network-side device, wherein the fourth message comprises at least one of the following:
information about a first target slice expected to be used, and terminal capability indication information; wherein the terminal capability indication information is used to indicate whether the terminal supports a first capability, and the first capability is a capability of receiving and using information for indicating whether using the requested slice in the target TA is supported.

13. The communication method according to any one of claims 2 to 6, wherein the method further comprises:
receiving, by the terminal, slice information configured by a first target network and sent by the network-side device; and
in a case that the slice information comprises information about a second target slice in a rejected slice list corresponding to a fourth TA, removing, by the terminal, the information about the second target slice from the rejected slice list and stopping, by the terminal, timing of a second timer associated with the information about the second target slice; the fourth TA being a TA corresponding to the first target network.

14. The communication method according to any one of claims 2 to 6, wherein the method further comprises:
receiving, by the terminal, allowed slice information for a second target network sent by the network-side device; and
in a case that the allowed slice information comprises information about a third target slice in a rejected slice list corresponding to a fifth TA, removing, by the terminal, the information about the third target slice from the rejected slice list and stopping, by the terminal, timing of a second timer associated with the information about the third target slice; the fifth TA being a TA corresponding to the second target network.

15. The communication method according to any one of claims 2 to 6, wherein the first message comprises at least one of the following:
information about the requested slice, and terminal capability indication information; wherein the terminal capability indication information is used to indicate whether the terminal supports a first capability, and the first capability is a capability of receiving and using information for indicating whether using the requested slice in the target TA is supported.

16. A communication method, comprising:
receiving, by a network-side device, a first message sent by a terminal, wherein the first message is used for requesting to use a requested slice to establish a connection to the network-side device; and
sending, by the network-side device, a second message to the terminal, wherein the second message carries information for indicating whether using the requested slice in a target tracking area TA is supported.

17. The communication method according to claim 16, wherein
the second message comprises at least one of the following:
information about at least one first slice and first indication information, wherein the first indication information is used to indicate that the at least one first slice is unusable in a current TA; wherein the first slice is a slice in the requested slice, and the target tracking area TA comprises the current TA; or
the second message comprises at least one of the following:
information about at least one first slice, information about one or more first TAs corresponding to each first slice in the at least one first slice, information about at least one second slice, information about one or more second TAs corresponding to each second slice in the at least one second slice, and second indication information, wherein the first TA is a TA that does not support use of the first slice, the second TA is a TA that supports use of the second slice, and the second indication information is used to indicate that the first slice is unusable in the first TA, wherein the first slice or the second slice is a slice in the requested slice, and the target tracking area TA comprises the first TA or the second TA; or
the second message comprises at least one of the following:
at least one third slice, information about a third TA, and third indication information, wherein the third indication information is used to indicate that the third TA is a TA that supports use of the third slice or a TA that does not support use of the third slice, the target TA comprises the third TA, and the third slice is a slice in the requested slice.

18. The communication method according to claim 17, wherein
the second message comprises a rejected network slice selection assistance information NSSAI information element IE or a first IE, the rejected NSSAI IE or the first IE comprises a rejected NSSAI domain corresponding to each first slice in the at least one first slice, and the rejected NSSAI domain corresponding to each first slice comprises at least one of the following: information about the first slice, and the first indication information; and/or,
the second message comprises an extended rejected NSSAI IE, the extended rejected NSSAI IE comprises a partially extended rejected NSSAI list domain, the partially extended rejected NSSAI list domain comprises a rejected NSSAI domain corresponding to each first slice in the at least one first slice, and the rejected NSSAI domain corresponding to each first slice comprises at least one of the following: information about the first slice, and the first indication information.

19. The communication method according to claim 17, wherein
the second message comprises a rejected network slice selection assistance information NSSAI information element IE or a first IE, the rejected NSSAI IE or the first IE comprises a rejected NSSAI domain corresponding to each first slice in the at least one first slice, and the rejected NSSAI domain corresponding to each first slice comprises at least one of the following:
information about the first slice, the second indication information, and
information about the first TA; and/or
the second message comprises an extended rejected NSSAI IE, the extended rejected NSSAI IE comprises a partially extended rejected NSSAI list domain, the partially extended rejected NSSAI list domain comprises a rejected NSSAI domain corresponding to each first slice in the at least one first slice, and the rejected NSSAI domain corresponding to each first slice comprises at least one of the following: information about the first slice, the second indication information, and information about the first TA.

20. The communication method according to claim 17, wherein
the second message comprises an NSSAI service area list IE, the NSSAI service area list IE comprises at least one NSSAI service area list domain, and each NSSAI service area list domain comprises: an NSSAI field of the third slice, an NSSAI service area list field, and a target timer field, wherein the NSSAI service area list field comprises at least one of the following: third indication information, and information about the third TA.

21. The communication method according to claim 17, wherein
the second message comprises an extended allowed NSSAI IE, the extended allowed NSSAI IE comprises an allowed NSSAI domain corresponding to each of the at least one second slice, and the allowed NSSAI domain corresponding to each second slice comprises at least one of the following: a length of the allowed NSSAI domain, an NSSAI field of the second slice, and information about the second TA.

22. The communication method according to any one of claims 17 to 21, wherein the first TA comprises: a TA that does not support use of the first slice within a preset time range.

23. The communication method according to claim 22, wherein
the second message further comprises information about a first timer; and the first timer is used to indicate that the terminal is allowed to use the first slice in the first TA after the first timer expires.

24. The communication method according to any one of claims 16 to 21, wherein
receiving, by the network-side device, a third message sent by the terminal, wherein the third message is used to indicate that the terminal has received the information for indicating whether using the requested slice in a target tracking area TA is supported.

25. The communication method according to any one of claims 17 to 21, wherein the first message comprises at least one of the following:
information about the requested slice, and terminal capability indication information; wherein the terminal capability indication information is used to indicate whether the terminal supports a first capability, and the first capability is a capability of receiving and using information for indicating whether using the requested slice in the target TA is supported.

26. A communication apparatus, comprising:
a sending module, configured to send a first message to a network-side device, wherein the first message is used for requesting to use a requested slice to establish a connection to the network-side device; and
a receiving module, configured to receive a second message sent by the network-side device, wherein the second message carries information for indicating whether using the requested slice in a target tracking area TA is supported.

27. A communication apparatus, comprising:
a receiving module, configured to receive a first message sent by a terminal, wherein the first message is used for requesting to use a requested slice to establish a connection to a network-side device; and
a sending module, configured to send a second message to the terminal, wherein the second message carries information for indicating whether using the requested slice in a target tracking area TA is supported.

28. A terminal, comprising a processor and a memory, wherein the memory stores a program or instruction capable of running on the processor, and when the program or instruction is executed by the processor, the steps of the communication method according to any one of claims 1 to 15 are implemented.

29. A network-side device, comprising a processor and a memory,
wherein the memory stores a program or instruction capable of running on the processor, and when the program or instruction is executed by the processor, the steps of the communication method according to any one of claims 16 to 25 are implemented.

30. A readable storage medium, wherein the readable storage medium stores a program or instruction, and when the program or instruction is executed by a processor, the steps of the communication method according to any one of claims 1 to 15 are implemented, or the steps of the communication method according to any one of claims 16 to 25 are implemented.
